(19) Europäisches Patentamt
European Patent Office
Office européen des brevets

(11) EP 4 691 618 A1

(12) **EUROPEAN PATENT APPLICATION**
published in accordance with Art. 153(4) EPC

(43) Date of publication:
**11.02.2026 Bulletin 2026/07**

(21) Application number: **24788724.3**

(22) Date of filing: **09.04.2024**

(51) International Patent Classification (IPC):
***B01J 13/14*** (2006.01) ***C08F 216/14*** (2006.01)
***C08F 224/00*** (2006.01) ***C08L 27/12*** (2006.01)
***C08L 101/00*** (2006.01)

(52) Cooperative Patent Classification (CPC):
**B01J 13/14; C08F 2/20; C08F 14/18; C08F 34/02; C08F 36/20; C08F 216/14; C08F 224/00; C08K 7/22; C08L 27/12; C08L 37/00; C08L 101/00**

(86) International application number:
**PCT/JP2024/014415**

(87) International publication number:
**WO 2024/214700 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023 JP 2023065143**

(71) Applicants:
- **Daikin Industries, Ltd.**
  **Osaka-shi, Osaka 530-0001 (JP)**
- **National University Corporation Kobe University**
  **Kobe-shi, Hyogo 657-8501 (JP)**

(72) Inventors:
- **TANAKA, Yoshito**
  **Osaka-Shi, Osaka 530-0001 (JP)**
- **IIDA, Mayumi**
  **Osaka-Shi, Osaka 530-0001 (JP)**
- **NAKANISHI, Kanako**
  **Osaka-Shi, Osaka 530-0001 (JP)**
- **SUZUKI, Yuuki**
  **Osaka-Shi, Osaka 530-0001 (JP)**
- **MINAMI, Hideto**
  **Kobe-shi, Hyogo 657-8501 (JP)**

(74) Representative: **Hoffmann Eitle**
**Patent- und Rechtsanwälte PartmbB**
**Arabellastraße 30**
**81925 München (DE)**

(54) **METHOD FOR PRODUCING HOLLOW FINE PARTICLES, HOLLOW FINE PARTICLES, PHASE-SEPARATED FINE PARTICLES, AQUEOUS DISPERSION, AND COMPOSITION**

(57) The disclosure aims to provide a production method capable of producing a hollow fine particulate containing a perfluororesin, having a large average particle size, and having a monoporous structure. Provided is a method for producing a hollow fine particulate including: a step A of dispersing a solution containing a perfluoromonomer and a non-polymerizable solvent capable of dissolving the perfluoromonomer and having an SP value of 9.00 to 9.80 $(cal/cm^3)^{1/2}$ into water to provide a dispersion; a step B of polymerizing the perfluoromonomer to provide a phase-separated fine particulate containing a perfluororesin and having a monoporous structure; and a step C of removing the non-polymerizable solvent in the phase-separated fine particulate to provide a hollow fine particulate having a monoporous structure.

FIG.1

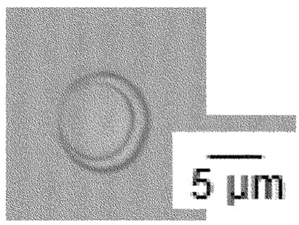


EP 4 691 618 A1

## Description

TECHNICAL FIELD

The disclosure relates to methods for producing a hollow fine particulate, hollow fine particulates, phase-separated fine particulates, aqueous dispersions, and compositions.

BACKGROUND ART

Hollow fine particulates having a pore therein are excellent for achievement of light weight, low refractive index, low dielectricity, and other characteristics and are therefore examined in various studies. Such hollow fine particulates are conventionally formed from inorganic particles, but inorganic particles are heavy in weight. This therefore leads to current studies on hollow fine particulates formed from a polymer instead of inorganic particles.

For example, Patent Literature 1 discloses hollow fine resin particles containing a resin having a fluorine atom, wherein the hollow resin fine particles have an average particle size of 10 to 200 nm, a porosity of 10% or higher, and a refractive index of 1.30 or lower.

Patent Literature 2 discloses a hollow fine particulate containing a fluorine-containing resin and having an average particle size of 70 nm or greater and 10 μm or less.

CITATION LIST

- Patent Literature

Patent Literature 1: JP 2005-213366 A
Patent Literature 2: JP 2020-183500 A

SUMMARY OF INVENTION

- Technical Problem

However, a hollow fine particulate with a small particle size is disadvantageous in terms of handleability. Thus, a technique of employing a large particle size to improve the handleability has been desired.

The production of a hollow fine particulate containing a perfluororesin and having a monoporous structure has been difficult.

The disclosure provides a production method capable of producing a hollow fine particulate containing a perfluororesin, having a large average particle size, and having a monoporous structure.

The disclosure also provides a hollow fine particulate containing a perfluororesin, having a large average particle size, and having a monoporous structure as well as a composition containing the hollow fine particulate.

The disclosure also provides a phase-separated fine particulate containing a perfluororesin, having a large average particle size, and having a monoporous structure as well as an aqueous dispersion and a composition each containing the phase-separated fine particulate.

- Solution to Problem

The disclosure (1) relates to a method for producing a hollow fine particulate including:

a step A of dispersing a solution containing a perfluoromonomer and a non-polymerizable solvent capable of dissolving the perfluoromonomer and having an SP value of 9.00 to 9.80 $(cal/cm^3)^{1/2}$ into water to provide a dispersion;
a step B of polymerizing the perfluoromonomer to provide a phase-separated fine particulate containing a perfluororesin and having a monoporous structure; and
a step C of removing the non-polymerizable solvent in the phase-separated fine particulate to provide a hollow fine particulate having a monoporous structure.

The disclosure (2) relates to the method for producing a hollow fine particulate according to the disclosure (1), wherein in the step A, the dispersion contains an initiator containing an ester group at a terminal.

The disclosure (3) relates to the method for producing a hollow fine particulate according to the disclosure (2), wherein the ester group is represented by - COOR where R is an unbranched alkyl group.

The disclosure (4) relates to the method for producing a hollow fine particulate according to any one of the disclosures (1) to (3),
wherein in the step (A), the dispersion contains a particulate dispersion stabilizer, and the particulate dispersion stabilizer contains at least one fluorine-containing particulate dispersion stabilizer selected from the group consisting of a fluoropolymer ($\alpha$) of a monomer ($\alpha$) represented by the following general formula ($\alpha$) and an anionic fluorine-containing surfactant represented by the following general formula (1):

general formula ($\alpha$):

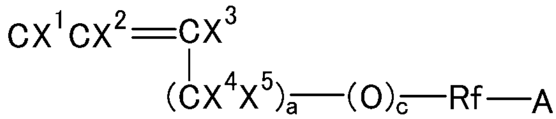

wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is -COOM, $-SO_3M$, $-OSO_3M$, or $-C(CF_3)_2OM$ (wherein M is H, a metal atom, $NR^7_4$, an optionally substituted imidazolium, an optionally substituted pyridinium, or an optionally substituted phosphonium; and $R^7$ is H or an organic group); and

general formula (1): $Rf\S\ (X^-)_j(M^+)_j$

wherein Rf§ is a C1-C30 (per)fluoroalkyl chain or a (per) fluoro (poly) oxyalkylene chain; $X^-$ is $-COO^-$, $-PO_3^-$, or $-SO_3^-$; $M^+$ is selected from $H^+$, $NH_4^+$, and an alkali metal ion; and j is optionally 1 or 2.

The disclosure (5) relates to the method for producing a hollow fine particulate according to the disclosure (4), wherein the particulate dispersion stabilizer further contains at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer.

The disclosure (6) relates to the method for producing a hollow fine particulate according to any one of the disclosures (1) to (3),
wherein in the step A, the dispersion contains a particulate dispersion stabilizer, and the particulate dispersion stabilizer includes at least one selected from the group consisting of a homopolymer of $CF_2=CFCF_2CF_2SO_3H$, a homopolymer of $CF_2=CF-OCF_2CF_2COOH$, polyvinyl alcohol, and polyvinylpyrrolidone.

The disclosure (7) relates to the method for producing a hollow fine particulate according to any one of the disclosures (1) to (6), wherein the perfluoromonomer is a perfluoroolefin.

The disclosure (8) relates to the method for producing a hollow fine particulate according to the disclosure (7), wherein the perfluoroolefin contains at least one of a monofunctional monomer containing one polymerizable reactive group or a multifunctional monomer containing two or more polymerizable reactive groups.

The disclosure (9) relates to the method for producing a hollow fine particulate according to the disclosure (8), wherein the perfluoroolefin contains the monofunctional monomer and the multifunctional monomer, and the perfluororesin has a mass ratio of a polymerized unit based on the monofunctional monomer to a polymerized unit based on the multifunctional monomer (polymerized unit based on the monofunctional monomer/polymerized unit based on the multifunctional monomer) of 75/25 to 25/75.

The disclosure (10) relates to the method for producing a hollow fine particulate according to the disclosure (8) or (9), wherein the monofunctional monomer is a cyclic perfluoroolefin, and the multifunctional monomer is a monomer represented by the following formula (b):

$CF_2=CF-Q^1-CF=CF_2$ (b)

wherein $Q^1$ is a C1-C5 linear or optionally branched perfluoroalkylene group optionally containing an ether bond.

The disclosure (11) relates to the method for producing a hollow fine particulate according to the disclosure (10), wherein the cyclic perfluoroolefin is a monomer represented by the following formula (a) or (c):

[Chem. 1]

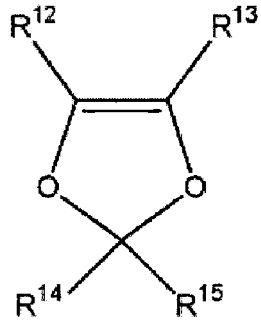

(a)

wherein $R^{12}$ to $R^{15}$ are each independently a fluorine atom, a C1-C5 perfluoroalkyl group, or a C1-C5 perfluoroalkoxy group; or

[Chem. 2]

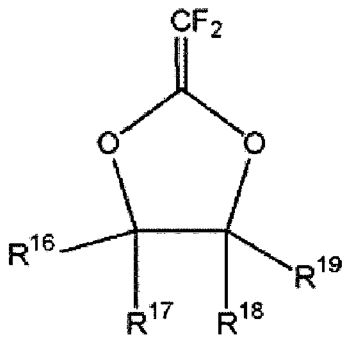

(c)

wherein $R^{16}$ to $R^{19}$ are each independently a fluorine atom, a C1-C5 perfluoroalkyl group, or a C1-C5 perfluoroalkoxy group.

The disclosure (12) relates to the method for producing a hollow fine particulate according to the disclosure (11), wherein the perfluoroolefin is a monomer represented by the formula (c).

The disclosure (13) relates to the method for producing a hollow fine particulate according to the disclosure (9),

wherein the monofunctional monomer is perfluoro(2-methylene-4-methyl-1,3-dioxolane),
the multifunctional monomer includes at least one selected from the group consisting of $CF_2=CF-O-(CF_2)_3-O-CF=CF_2$ and $CF_2=CFCF_2CF_2OCF=CF_2$, and the perfluororesin has a mass ratio of the polymerized unit based on the monofunctional monomer to the polymerized unit based on the multifunctional monomer (polymerized unit based on the monofunctional monomer/polymerized unit based on the multifunctional monomer) of 70/30 to 30/70.

The disclosure (14) relates to the method for producing a hollow fine particulate according to any one of the disclosures (1) to (13), wherein in the step B, the perfluororesin has a glass transition temperature of 60°C or higher.

The disclosure (15) relates to the method for producing a hollow fine particulate according to the disclosure 14, wherein in the step B, the glass transition temperature of the perfluororesin is 120°C or higher.

The disclosure (16) relates to the method for producing a hollow fine particulate according to any one of the disclosures (1) to (15), wherein the non-polymerizable solvent is a fluorine-containing non-polymerizable solvent.

The disclosure (17) relates to the method for producing a hollow fine particulate according to the disclosure (16), wherein the fluorine-containing non-polymerizable solvent is a fluorine-containing alcohol.

The disclosure (18) relates to the method for producing a hollow fine particulate according to the disclosure (17), wherein the fluorine-containing alcohol has a carbon number of 2 to 7.

The disclosure (19) relates to the method for producing a hollow fine particulate according to the disclosure (17) or (18), wherein the fluorine-containing alcohol has a hydrogen atom at an ω-position.

The disclosure (20) relates to the method for producing a hollow fine particulate according to any one of the disclosures (1) to (15), wherein the non-polymerizable solvent includes at least one selected from the group consisting of $H(CF_2)_6CH_2OH$, $F(CF_2)_3CH_2OH$, and $F(CF_2)_4CH_2OH$.

The disclosure (21) relates to the method for producing a hollow fine particulate according to any one of the

disclosures (1) to (20), wherein the hollow fine particulate has an average particle size of 1.0 μm or greater.
The disclosure (22) relates to the method for producing a hollow fine particulate according to any one of the disclosures (1) to (21), wherein the hollow fine particulate has a porosity of 30% by volume or higher.
The disclosure (23) relates to the method for producing a hollow fine particulate according to the disclosure (22), wherein the porosity of the hollow fine particulate is 40% by volume or higher.
The disclosure (24) relates to a hollow fine particulate containing:

a perfluororesin containing a polymerized unit based on a perfluoromonomer,
the hollow fine particulate containing substantially no non-polymerizable solvent,
the hollow fine particulate having an average particle size of 1.0 μm or greater,
the hollow fine particulate having a monoporous structure.

The disclosure (25) relates to the hollow fine particulate according to the disclosure (24), wherein the perfluoromonomer is a perfluoroolefin.
The disclosure (26) relates to the hollow fine particulate according to the disclosure (25), wherein the perfluoroolefin contains at least one of a monofunctional monomer containing one polymerizable reactive group or a multifunctional monomer containing two or more polymerizable reactive groups.
The disclosure (27) relates to the hollow fine particulate according to the disclosure (26),

wherein the perfluoroolefin contains the monofunctional monomer and the multifunctional monomer, and
the perfluororesin has a mass ratio of a polymerized unit based on the monofunctional monomer to a polymerized unit based on the multifunctional monomer (polymerized unit based on the monofunctional monomer/polymerized unit based on the multifunctional monomer) of 75/25 to 25/75.

The disclosure (28) relates to the hollow fine particulate according to the disclosure (26) or (27), wherein the monofunctional monomer is a cyclic perfluoroolefin, and the multifunctional monomer is a monomer represented by the following formula (b):

$$CF_2=CF\text{-}Q^1\text{-}CF=CF_2 \qquad (b)$$

wherein $Q^1$ is a C1-C5 linear or optionally branched perfluoroalkylene group optionally containing an ether bond.
The disclosure (29) relates to the hollow fine particulate according to the disclosure (28), wherein the cyclic perfluoroolefin is a monomer represented by the following formula (a) or (c):

[Chem. 3]

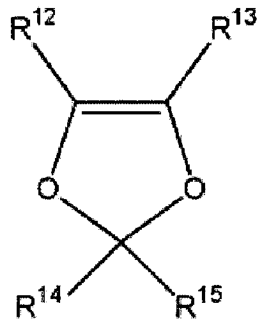

(a)

wherein $R^{12}$ to $R^{15}$ are each independently a fluorine atom, a C1-C5 perfluoroalkyl group, or a C1-C5 perfluoroalkoxy group; or

[Chem. 4]

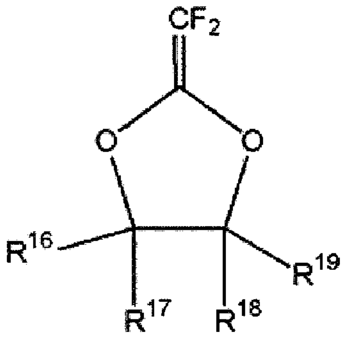

(c)

wherein $R^{16}$ to $R^{19}$ are each independently a fluorine atom, a C1-C5 perfluoroalkyl group, or a C1-C5 perfluoroalkoxy group.

The disclosure (30) relates to the hollow fine particulate according to the disclosure (29), wherein the perfluoroolefin is a monomer represented by the formula (c).

The disclosure (31) relates to the hollow fine particulate according to the disclosure (27),

wherein the monofunctional monomer is perfluoro(2-methylene-4-methyl-1,3-dioxolane) ,
the multifunctional monomer includes at least one selected from the group consisting of $CF_2$=CF-O-$(CF_2)_3$-O-CF=$CF_2$ and $CF_2$=$CFCF_2CF_2OCF$=$CF_2$, and
the perfluororesin has a mass ratio of the polymerized unit based on the monofunctional monomer to the polymerized unit based on the multifunctional monomer (polymerized unit based on the monofunctional monomer/polymerized unit based on the multifunctional monomer) of 70/30 to 30/70.

The disclosure (32) relates to the hollow fine particulate according to any one of the disclosures (24) to (31), wherein the perfluororesin has a glass transition temperature of 60°C or higher.

The disclosure (33) relates to the hollow fine particulate according to the disclosure (32), wherein the glass transition temperature of the perfluororesin is 120°C or higher.

The disclosure (34) relates to the hollow fine particulate according to any one of the disclosures (24) to (33), wherein the hollow fine particulate has a porosity of 30% by volume or higher.

The disclosure (35) relates to the hollow fine particulate according to the disclosure (34), wherein the porosity of the hollow fine particulate is 40% by volume or higher.

The disclosure (36) relates to the hollow fine particulate according to any one of the disclosures (24) to (35), wherein the perfluororesin contains a particulate dispersion stabilizer, and the particulate dispersion stabilizer contains at least one fluorine-containing particulate dispersion stabilizer selected from the group consisting of a fluoropolymer ($\alpha$) of a monomer ($\alpha$) represented by the following general formula ($\alpha$) and an anionic fluorine-containing surfactant represented by the following general formula (1):

general formula ($\alpha$):

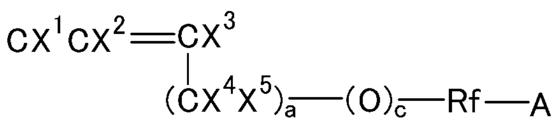

wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is -COOM, -$SO_3$M, -$OSO_3$M, or -$C(CF_3)_2$OM (wherein M is H, a metal atom, $NR^7_4$, an optionally substituted imidazolium, an optionally substituted pyridinium, or an optionally substituted phosphonium; and $R^7$ is H or an organic group); and

g eneral formula (1): $Rf§(X^-)_j(M^+)_j$

wherein Rf§ is a C1-C30 (per)fluoroalkyl chain or a (per) fluoro (poly) oxyalkylene chain; $X^-$ is -$COO^-$, -$PO_3^-$, or -$SO_3^-$;

$M^+$ is selected from $H^+$, $NH_4^+$, and an alkali metal ion; and j is optionally 1 or 2.

The disclosure (37) relates to the hollow fine particulate according to the disclosure (36), wherein the particulate dispersion stabilizer further contains at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer.
The disclosure (38) relates to the hollow fine particulate according to any one of the disclosures (24) to (35), wherein the perfluororesin contains a particulate dispersion stabilizer, and the particulate dispersion stabilizer includes at least one selected from the group consisting of a homopolymer of $CF_2=CFCF_2CF_2SO_3H$, a homopolymer of $CF_2=CF-OCF_2CF_2COOH$, polyvinyl alcohol, and polyvinylpyrrolidone.
The disclosure (39) relates to the hollow fine particulate according to any one of the disclosures (24) to (38), wherein the non-polymerizable solvent includes at least one selected from the group consisting of $H(CF_2)_6CH_2OH$, $F(CF_2)_3CH_2OH$, and $F(CF_2)_4CH_2OH$.
The disclosure (40) relates to the hollow fine particulate according to any one of the disclosures (24) to (39), which is used for an electronic material.
The disclosure (41) relates to a phase-separated fine particulate containing:

a perfluororesin containing a polymerized unit based on a perfluoromonomer; and
a non-polymerizable solvent,
the phase-separated fine particulate having an average particle size of 1.0 μm or greater,
the phase-separated fine particulate having a monoporous structure.

The disclosure (42) relates to the phase-separated fine particulate according to the disclosure (41), wherein the perfluoromonomer is a perfluoroolefin.
The disclosure (43) relates to the phase-separated fine particulate according to the disclosure (42), wherein the perfluoroolefin contains at least one of a monofunctional monomer containing one polymerizable reactive group or a multifunctional monomer containing two or more polymerizable reactive groups.
The disclosure (44) relates to the phase-separated fine particulate according to the disclosure (43), wherein the perfluoroolefin contains the monofunctional monomer and the multifunctional monomer, and the perfluororesin has a mass ratio of a polymerized unit based on the monofunctional monomer to a polymerized unit based on the multifunctional monomer (polymerized unit based on the monofunctional monomer/polymerized unit based on the multifunctional monomer) of 75/25 to 25/75.
The disclosure (45) relates to the phase-separated fine particulate according to the disclosure (43) or (44),

wherein the monofunctional monomer is a cyclic perfluoroolefin, and
the multifunctional monomer is a monomer represented by the following formula (b):

$$CF_2=CF-Q^1-CF=CF_2 \qquad (b)$$

wherein $Q^1$ is a C1-C5 linear or optionally branched perfluoroalkylene group optionally containing an ether bond.
The disclosure (46) relates to the phase-separated fine particulate according to the disclosure (45), wherein the cyclic perfluoroolefin is a monomer represented by the following formula (a) or (c):

[Chem. 5]

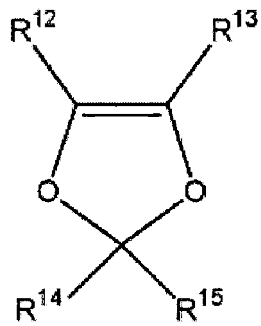

(a)

wherein $R^{12}$ to $R^{15}$ are each independently a fluorine atom, a C1-C5 perfluoroalkyl group, or a C1-C5 perfluoroalkoxy

group; or

[Chem. 6]

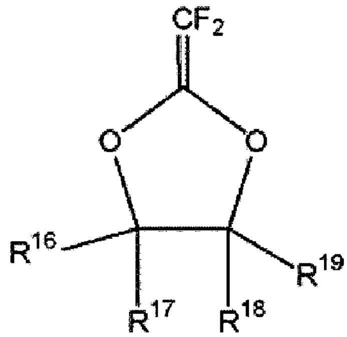

(c)

wherein $R^{16}$ to $R^{19}$ are each independently a fluorine atom, a C1-C5 perfluoroalkyl group, or a C1-C5 perfluoroalkoxy group.

The disclosure (47) relates to the phase-separated fine particulate according to the disclosure (46), wherein the perfluoroolefin is a monomer represented by the formula (c).

The disclosure (48) relates to the phase-separated fine particulate according to the disclosure (44),

wherein the monofunctional monomer is perfluoro(2-methylene-4-methyl-1,3-dioxolane) ,
the multifunctional monomer includes at least one selected from the group consisting of $CF_2=CF-O-(CF_2)_3-O-CF=CF_2$ and $CF_2=CFCF_2CF_2OCF=CF_2$, and
the perfluororesin has a mass ratio of the polymerized unit based on the monofunctional monomer to the polymerized unit based on the multifunctional monomer (polymerized unit based on the monofunctional monomer/polymerized unit based on the multifunctional monomer) of 70/30 to 30/70.

The disclosure (49) relates to the phase-separated fine particulate according to any one of the disclosures (41) to (48), wherein the perfluororesin has a glass transition temperature of 60°C or higher.

The disclosure (50) relates to the phase-separated fine particulate according to the disclosure (49), wherein the glass transition temperature of the perfluororesin is 120°C or higher.

The disclosure (51) relates to the phase-separated fine particulate according to any one of the disclosures (41) to (50), wherein the phase-separated fine particulate has a porosity of 30% by volume or higher.

The disclosure (52) is the phase-separated fine particulate according to the disclosure (51), wherein the porosity of the phase-separated fine particulate is 40% by volume or higher.

The disclosure (53) relates to the phase-separated fine particulate according to any one of the disclosures (41) to (52),
wherein the perfluororesin contains a particulate dispersion stabilizer, and the particulate dispersion stabilizer contains at least one fluorine-containing particulate dispersion stabilizer selected from the group consisting of a fluoropolymer ($\alpha$) of a monomer ($\alpha$) represented by the following general formula ($\alpha$) and an anionic fluorine-containing surfactant represented by the following general formula (1):

general formula ($\alpha$):

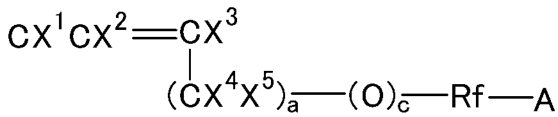

wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is -COOM, $-SO_3M$, $-OSO_3M$, or $-C(CF_3)_2OM$ (wherein M is H, a metal atom, $NR^7_4$, an optionally substituted imidazolium, an optionally substituted pyridinium, or an optionally substituted phosphonium; and $R^7$ is H or an organic group); and

general formula (1): Rf§ $(X^-)_j(M^+)_j$

wherein Rf§ is a C1-C30 (per)fluoroalkyl chain or a (per) fluoro (poly) oxyalkylene chain; $X^-$ is $-COO^-$, $-PO_3^-$, or - $SO_3^-$; $M^+$ is selected from $H^+$, $NH_4^+$, and an alkali metal ion; and j is optionally 1 or 2.

The disclosure (54) relates to the phase-separated fine particulate according to the disclosure (53), wherein the particulate dispersion stabilizer further contains at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer.

The disclosure (55) relates to the phase-separated fine particulate according to any one of the disclosures (41) to (52),

wherein the perfluororesin contains a particulate dispersion stabilizer, and the particulate dispersion stabilizer includes at least one selected from the group consisting of a homopolymer of $CF_2=CFCF_2CF_2SO_3H$, a homopolymer of $CF_2=CF-OCF_2CF_2COOH$, polyvinyl alcohol, and polyvinylpyrrolidone.

The disclosure (56) relates to the phase-separated fine particulate according to any one of the disclosures (41) to (55), wherein the non-polymerizable solvent includes at least one selected from the group consisting of $H(CF_2)_6CH_2OH$, $F(CF_2)_3CH_2OH$, and $F(CF_2)_4CH_2OH$.

The disclosure (57) relates to an aqueous dispersion containing the phase-separated fine particulate according to any one of the disclosures (41) to (56).

The disclosure (58) relates to a composition containing: the hollow fine particulate according to any one of the disclosures (24) to (40); and an insulating resin.

The disclosure (59) relates to a composition containing: the phase-separated fine particulate according to any one of the disclosures (41) to (56); and an insulating resin.

- Advantageous Effects of Invention

The production method of the disclosure is capable of producing a hollow fine particulate containing a perfluororesin, having a large average particle size, and having a monoporous structure.

The hollow fine particulate of the disclosure and the phase-separated fine particulate of the disclosure each have a large average particle size though they each contain a perfluororesin.

BRIEF DESCRIPTION OF THE DRAWINGS

FIG. 1 shows an optical micrograph of suspended particles (monoporous bodies) dispersed in water obtained in Example 1.

FIG. 2 shows a SEM photograph of a hollow fine particulate (monoporous body) obtained in Example 2.

FIG. 3 shows a SEM photograph of a cross section of a hollow fine particulate (monoporous body) obtained in Example 2.

FIG. 4 shows an optical micrograph of suspended particles (monoporous bodies) dispersed in water obtained in Example 3.

FIG. 5 shows a SEM photograph of a cross section of a hollow fine particulate (monoporous body) obtained in Example 6.

FIG. 6 shows a SEM photograph of a hollow fine particulate (multiporous body) obtained in Comparative Example 5.

FIG. 7 shows a SEM photograph of a hollow fine particulate (particulate aggregate (a type of multiporous body)) obtained in Comparative Example 7.

FIG. 8 shows a SEM photograph of a hollow fine particulate (multiporous body) obtained in Comparative Example 8.

FIG. 9 shows an optical micrograph of a hollow fine particulate (particulate aggregate (a type of multiporous body)) obtained in Comparative Example 9.

FIG. 10 shows an optical micrograph of suspended particles (having a structure reversed from that of Example 1) dispersed in water obtained in Comparative Example 10.

FIG. 11 shows an optical micrograph of suspended particles (multiporous bodies) dispersed in water obtained in Comparative Example 11.

FIG. 12 shows an optical micrograph of suspended particles (having a structure reversed from that of Example 1) dispersed in water obtained in Comparative Example 12.

FIG. 13 shows an optical micrograph of suspended particles (monoporous bodies) dispersed in water obtained in Example 7.
FIG. 14 shows an optical micrograph of suspended particles (monoporous bodies) dispersed in water obtained in Example 9.
FIG. 15 shows an optical micrograph of suspended particles (monoporous bodies) dispersed in water obtained in Example 11.
FIG. 16 shows an optical micrograph of suspended particles (monoporous bodies) dispersed in water obtained in Example 13.
FIG. 17 shows an optical micrograph of suspended particles (monoporous bodies) dispersed in water obtained in Example 15.
FIG. 18 shows an optical micrograph of suspended particles (monoporous bodies) dispersed in water obtained in Example 17.
FIG. 19 shows an optical micrograph of suspended particles (monoporous bodies) dispersed in water obtained in Example 19.

## DESCRIPTION OF EMBODIMENTS

Some of the terms used in the disclosure are defined or described before specifically describing the disclosure.
The term "organic group" in the disclosure refers to a group containing one or more carbon atom(s) or a group formed by removing one hydrogen atom from an organic compound.
Examples of the "organic group" include:

an alkyl group optionally having one or more substituent(s),
an alkenyl group optionally having one or more substituent(s),
an alkynyl group optionally having one or more substituent(s),
a cycloalkyl group optionally having one or more substituent(s),
a cycloalkenyl group optionally having one or more substituent(s),
a cycloalkadienyl group optionally having one or more substituent(s),
an aryl group optionally having one or more substituent(s),
an aralkyl group optionally having one or more substituent(s),
a non-aromatic heterocyclic group optionally having one or more substituent(s),
a heteroaryl group optionally having one or more substituent(s),
a cyano group,
a formyl group,
RaO-,
RaCO-,
$RaSO_2$-,
RaCOO-,
RaNRaCO-,
RaCONRa-,
RaOCO-,
$RaOSO_2$-, and
$RaNRbSO_2$-.

In the formulas, Ra is independently:

an alkyl group optionally having one or more substituent(s),
an alkenyl group optionally having one or more substituent(s),
an alkynyl group optionally having one or more substituent(s),
a cycloalkyl group optionally having one or more substituent(s),
a cycloalkenyl group optionally having one or more substituent(s),
a cycloalkadienyl group optionally having one or more substituent(s),
an aryl group optionally having one or more substituent(s),
an aralkyl group optionally having one or more substituent(s),
a non-aromatic heterocyclic group optionally having one or more substituent(s), or
a heteroaryl group optionally having one or more substituent(s), and
Rb is independently H or an alkyl group optionally having one or more substituent(s).

The organic group is preferably an alkyl group optionally having one or more substituent(s).

The term "substituent" in the disclosure refers to a substitutable group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonyl amino group, an aromatic oxycarbonyl amino group, a heterocyclic oxycarbonyl amino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.

The aliphatic group may be saturated or unsaturated and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include an alkyl group having a total carbon number of 1 to 8, preferably 1 to 4, such as a methyl group, an ethyl group, a vinyl group, a cyclohexyl group, or a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include an aryl group having a total carbon number of 6 to 12, preferably a total carbon number of 6 to 10, such as a phenyl group, a 4-nitrophenyl group, a 4-acethylaminophenyl group, or a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include a 5- to 6-membered heterocycle having a total carbon number of 2 to 12, preferably 2 to 10, such as a 2-tetrahydrofuryl group or a 2-pyrimidyl group.

The acyl group may have an aliphatic carbonyl group, an aryl carbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include an acyl group having a total carbon number of 2 to 8, preferably 2 to 4, such as an acetyl group, a propanoyl group, a benzoyl group, or a 3-pyridinecarbonyl group.

The acylamino group may have an aliphatic group, an aromatic group, a heterocyclic group, or the like, such as an acetylamino group, a benzoylamino group, a 2-pyridinecarbonylamino group, or a proparanoylamino group. Examples of the acylamino group include an acylamino group having a total carbon number of 2 to 12, preferably 2 to 8 and an alkylcarbonylamino group having a total carbon number of 2 to 8, such as an acetylamino group, a benzoylamino groups, a 2-pyridinecarbonylamino group, or a propanoylamino group.

The aliphatic oxycarbonyl group may be saturated or unsaturated and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include an alkoxycarbonyl group having a total carbon number of 2 to 8, preferably 2 to 4, such as a methoxycarbonyl group, an ethoxycarbonyl group, or a (t)-butoxycarbonyl group.

The carbamoyl group may have an aliphatic group, an aromatic group, a heterocyclic group, or the like. Examples of the carbamoyl group include an unsubstituted carbamoyl group and an alkylcarbamoyl group having a total carbon number of 2 to 9. Preferred examples include an unsubstituted carbamoyl group and an alkylcarbamoyl group having a total carbon number of 2 to 5, such as a N-methylcarbamoyl group, a N,N-dimethylcarbamoyl group, or a N-phenylcarbamoyl group.

The aliphatic sulfonyl group may be saturated or unsaturated and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include an alkylsulfonyl group having a total carbon number of 1 to 6, preferably 1 to 4, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include an arylsulfonyl group having a total carbon number of 6 to 10, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include an acylamino group having

a total carbon number of 2 to 12, preferably 2 to 8. Preferred examples include an alkylcarbonylamino group having a total carbon number of 2 to 8, such as an acetylamino group, a benzoylamino group, a 2-pyridinecarbonylamino group, or a proparanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, an alkyl sulfamoyl group having a total carbon number of 1 to 9, a dialkyl sulfamoyl group having a total carbon number of 2 to 10, an aryl sulfamoyl group having a total carbon number of 7 to 13, and a heterocyclic sulfamoyl group having a total carbon number of 2 to 12. Preferred examples include a sulfamoyl group, an alkylsulfamoyl group having a total carbon number of 1 to 7, a dialkylsulfamoyl group having a total carbon number of 3 to 6, an arylsulfamoyl group having a total carbon number of 6 to 11, and a heterocyclic sulfamoyl group having a total carbon number of 2 to 10, such as a sulfamoyl group, a methylsulfamoyl group, a N,N-dimethylsulfamoyl group, a phenylsulfamoyl group, or a 4-pyridinesulfamoyl group.

The aliphatic oxy group may be saturated or unsaturated and may have a methoxy group, an ethoxy group, an i-propyloxy group, a cyclohexyloxy group, a methoxyethoxy group, or the like. Examples of the aliphatic oxy group include an alkoxy group having a total carbon number of 1 to 8, preferably 1 to 6, such as a methoxy group, an ethoxy group, an i-propyloxy group, a cyclohexyloxy group, or a methoxyethoxy group.

The aromatic amino group and the heterocyclic amino group may each have an aliphatic group, an aliphatic oxy group, a halogen atom, a carbamoyl group, a heterocyclic group fused with the aryl group, or an aliphatic oxycarbonyl group, preferably an aliphatic group having a total carbon number of 1 to 4, an aliphatic oxy group having a total carbon number of 1 to 4, a halogen atom, a carbamoyl group having a total carbon number of 1 to 4, a nitro group, or an aliphatic oxycarbonyl group having a total carbon number of 2 to 4.

The aliphatic thio group may be saturated or unsaturated, and examples include an alkylthio group having a total carbon number of 1 to 8, preferably 1 to 6, such as a methylthio group, an ethylthio group, a carbamoylmethylthio group, or a t-butylthio group.

The carbamoylamino group may have an aliphatic group, an aryl group, a heterocyclic group, or the like. Examples of the carbamoylamino group include a carbamoylamino group, an alkylcarbamoylamino group having a total carbon number of 2 to 9, a dialkylcarbamoylamino group having a total carbon number of 3 to 10, an arylcarbamoylamino group having a total carbon number of 7 to 13, and a heterocyclic carbamoylamino group having a total carbon number of 3 to 12. Preferred examples include a carbamoylamino group, an alkylcarbamoylamino group having a total carbon number of 2 to 7, a dialkylcarbamoylamino group having a total carbon number of 3 to 6, an arylcarbamoylamino group having a total carbon number of 7 to 11, and a heterocyclic carbamoylamino group having a total carbon number of 3 to 10, such as a carbamoylamino group, a methylcarbamoylamino group, a N,N-dimethylcarbamoylamino group, a phenylcarbamoylamino group, or a 4-pyridinecarbamoylamino group.

In the disclosure, a range defined with endpoints includes all numbers in the range (for example, a range of 1 to 10 includes 1.4, 1.9, 2.33, 5.75, 9.98, and other numbers).

The phrase "at least one" in the disclosure includes all numbers of not smaller than 1 (for example, at least 2, at least 4, at least 6, at least 8, at least 10, at least 25, at least 50, and at least 100).

(Method for producing hollow fine particulate)

The production method of the disclosure includes: a step A of dispersing a solution containing a perfluoromonomer and a non-polymerizable solvent capable of dissolving the perfluoromonomer and having an SP value of 9.00 to 9.80 $(cal/cm^3)^{1/2}$ into water to provide a dispersion; a step B of polymerizing the perfluoromonomer to provide a phase-separated fine particulate containing a perfluororesin and having a monoporous structure; and a step C of removing the non-polymerizable solvent in the phase-separated fine particulate to provide a hollow fine particulate having a monoporous structure.

The disclosers performed studies to find that, in the case of producing a hollow fine particulate containing a perfluororesin by polymerizing a perfluoromonomer, a hollow fine particulate having a large average particle size and having a monoporous structure is difficult to obtain by conventional methods. The disclosers found that a hollow fine particulate containing a perfluororesin, having a large average particle size, and having a monoporous structure can be produced through the steps A to C, thereby completing the production method of the disclosure.

The step A includes dispersing a solution containing a perfluoromonomer and a non-polymerizable solvent capable of dissolving the perfluoromonomer and having an SP value of 9.00 to 9.80 $(cal/cm^3)^{1/2}$ into water to provide a dispersion. Liquid droplets are formed by dispersing the solution in water. Polymerizing the perfluoromonomer in the liquid droplets can provide a phase-separated fine particulate having a large average particle size and having a monoporous structure. Then, a hollow fine particulate having a large average particle size and having a monoporous structure can be

obtained by removing the non-polymerizable solvent in the phase-separated fine particulate.

In the production method of the disclosure, a hollow fine particulate shell is formed from the perfluororesin. Hereinbelow, a resin containing a structural unit based on a perfluoromonomer is referred to as a perfluororesin.

The reason why the monoporous structure is formed by the production method of the disclosure is believed to be as follows.

In the step A, the resulting polymer (perfluororesin) is precipitated on the surface of the droplets and diffuses, leading to the formation of a phase-separated fine particulate. In the case where the polymer is highly hydrophobic, the polymer may be precipitated not only on the surface of the droplets but also inside the droplets because of the presence of water outside the droplets. In such a case, phase separation may not proceed sufficiently, possibly leading to the formation of a phase-separated fine particulate having a multiporous structure. In the production method of the disclosure, a hydrophilic group is introduced at one or more terminals of the polymer owing to use of a non-polymerizable solvent having an SP value of 9.00 to 9.80 $(cal/cm^3)^{1/2}$, resulting in a polymer with highly hydrophilic termini. This promotes precipitation of the polymer on the surface of the droplets, and sufficient progress of phase separation is achieved. This presumably results in the formation of a phase-separated fine particulate having a monoporous structure.

In the step A, a dispersion medium other than water may be used together with water. The dispersion medium other than water may be any medium that is miscible with water and can produce a dispersion in the step A. Examples thereof include dimethylformamide, dimethylsulfoxide, dimethylacetamide, n-methylpyrrolidone, methanol, ethanol, propanol, and isopropanol.

Examples of the perfluoromonomer include perfluoroacrylic monomers, perfluorostyrene monomers, and perfluoroolefins. Preferred are perfluoroolefins.

As a perfluoroolefin, at least one of a monofunctional monomer containing one polymerizable reactive group or a multifunctional monomer containing two or more (preferably two to four) polymerizable reactive groups can be used, though not limited thereto. Preferably, at least a monofunctional monomer is used. Preferably, a monofunctional monomer and a multifunctional monomer are used together.

The monofunctional monomer used is suitably a cyclic perfluoroolefin. The multifunctional monomer used is suitably a monomer (cyclopolymerizable monomer) represented by the following formula (b). Use of these enables introduction of a cyclic structure into the main chain of the polymer, resulting in a polymer with a high glass transition temperature.

$$CF_2=CF-Q^1-CF=CF_2 \qquad (b)$$

In the formula, $Q^1$ is a C1-C5 linear or optionally branched perfluoroalkylene group optionally containing an ether bond.

The cyclic perfluoroolefin is a high-fluorine-conversion olefin with a cyclic structure. The cyclic perfluoroolefin is not limited and may suitably be a monomer represented by the following formula (a) or (c):

[Chem. 7]

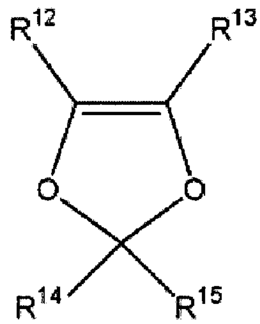

(a)

wherein $R^{12}$ to $R^{15}$ are each independently a fluorine atom, a C1-C5 perfluoroalkyl group, or a C1-C5 perfluoroalkoxy group; or

[Chem. 8]

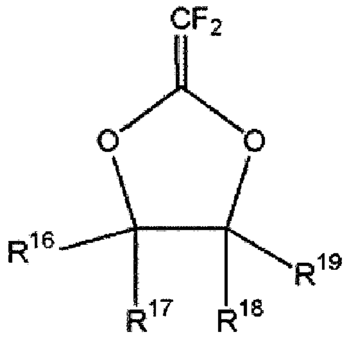

(c)

wherein $R^{16}$ to $R^{19}$ are each independently a fluorine atom, a C1-C5 perfluoroalkyl group, or a C1-C5 perfluoroalkoxy group.

Specific examples of the monomer represented by the formula (a) include monomers represented by the following formulas (a-1) to (a-5). Specific examples of the monomer represented by the formula (c) include monomers represented by the following formulas (a-6) and (a-7).

[Chem. 9]

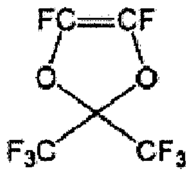

(a-1)

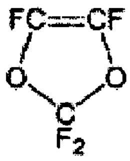

(a-2)

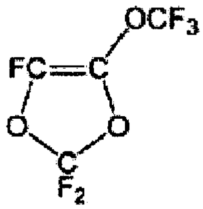

(a-3)

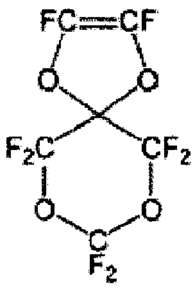

(a-4)

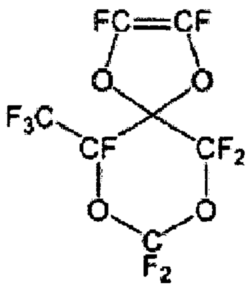

(a-5)

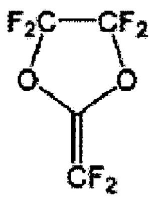

(a-6)

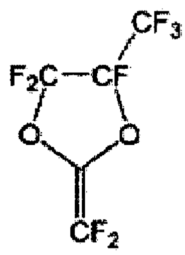

(a-7)

From the viewpoint of good electric properties, the cyclic perfluoroolefin is preferably a monomer represented by the formula (c), more preferably a monomer represented by the formula (a-6) or (a-7), still more preferably a monomer represented by the formula (a-7). In other words, preferably, three of $R^{16}$ to $R^{19}$ are fluorine atoms and one is a perfluoro methyl group in the formula (c).

In the formula (b), $Q^1$ is preferably a perfluoroalkylene group containing an ether bond. In this case, the ether bond in the perfluoroalkylene group may be present at one terminal of the group or may be present at both terminals of the group, or may be present between carbon atoms of the group. In order to achieve excellent cyclopolymerizability, the ether bond is preferably present at one terminal of the group.

Examples of the monomer represented by the formula (b) include perfluoro(3-butenyl vinyl ether), perfluoro(aryl vinyl ether), perfluoro(3,5-dioxaheptadiene), and perfluoro(3,5-dioxa-4,4-dimethylheptadiene). Particularly preferred is perfluoro(3-butenyl vinyl ether).

Examples of the monomer represented by the formula (b) also include $CF_2=CF-O-(CF_2)_n-O-CF=CF_2$ (wherein n = 1 to 20), $CF_2=CF-(CF_2)_n-O-CF=CF_2$ (wherein n = 1 to 20), $CF_2=CF-(CF_2)_m-CF=CF_2$ (wherein m = 1 to 20), $CF_2=CF-(O-CF_2CF(CF_3))_n-O-CF=CF_2$ (wherein n = 1 to 20), and $CF_2=CF-(CF_2)-CF=CF_2$ (wherein n = 1 to 20). Of these, $CF_2=CF-O-(CF_2)_n-O-CF=CF_2$ (wherein n = 1 to 20), $CF_2=CF-(CF_2)_n-O-CF=CF_2$ (wherein n = 1 to 20), and $CF_2=CF-(CF_2)_m-CF=CF_2$ (wherein m = 1 to 20) are preferred, $CF_2=CF-O-(CF_2)_n-O-CF=CF_2$ (wherein n = 1 to 20) and $CF_2=CF-(CF_2)_n-O-CF=CF_2$ (wherein n = 1 to 20) are more preferred, $CF_2=CF-O-(CF_2)_n-O-CF=CF_2$ (wherein n = 1 to 5) and $CF_2=CF-(CF_2)_n-O-CF=CF_2$ (wherein n = 1 to 5) are still more preferred, $CF_2=CF-O-(CF_2)_3-O-CF=CF_2$ and $CF_2=CF-(CF_2)_2-O-CF=CF_2$ are further preferred, and $CF_2=CF-O-(CF_2)_3-O-CF=CF_2$ is particularly preferred.

Containing two polymerizable reactive groups, the monomer represented by the formula (b) can function as a crosslinkable monomer. When the monomer represented by the formula (b) functions as a crosslinkable monomer, the effect of crosslinking is expected to improve the heat resistance, mechanical strength, and chemical resistance of the entire system. Such effects are preferred to ensure the strength of the shell layer particularly when the monoporous structure is formed as in the disclosure.

Examples of a unit formed by cyclopolymerization of the monomer represented by the formula (b) include those represented by the following formulas (II-1) to (II-4). As shown in the following formulas, in the formulas (II-1) to (II-3), four carbon atoms defining two double bonds define the main chain of the polymer, while in the formula (II-4), two terminal carbon atoms defining two double bonds alone define the main chain of the polymer. As in the formula (II-1), two carbon atoms among the four carbon atoms defining the two double bonds may define an aliphatic ring together with $Q^1$. As in the formulas (II-2) and (II-3), three double bonds may define an aliphatic ring together with $Q^1$. As in the formula (II-4), four double bonds may define an aliphatic ring together with $Q^1$. For the aliphatic ring containing $Q^1$, a 5- or 6-membered ring is easy to generate. A polymer generated by cyclopolymerization is a polymer in which a unit containing a 5- or 6-membered ring serves as a main unit.

[Chem. 10]

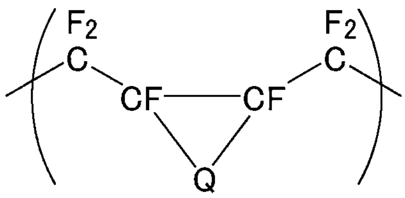

(II-1)

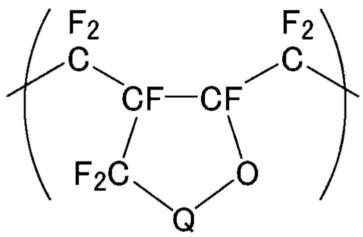

(II-2)

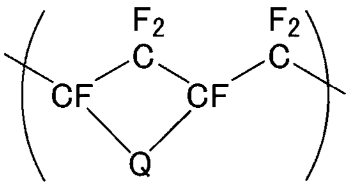

(II-3)

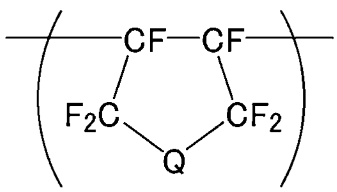

(II-4)

A monomer represented by the following formula (d) is also usable as the monofunctional monomer other than the cyclic perfluoroolefin:

$$CR^{20}R^{21}=CR^{22}R^{23} \qquad (d)$$

wherein $R^{20}$ to $R^{23}$ are each independently a fluorine atom, a C1-C5 perfluoroalkyl group, or a C1-C5 perfluoroalkoxy group.

Examples of the monomer represented by the formula (d) include $CF_2=CF_2$, $CF_2=CF(CF_3)$, $CF_2=CF(C_2F_5)$, $CF_2=CF(C_3F_7)$, $CF_2=CF(C_4F_9)$, $CF_2=CF(C_5F_{11})$, $CF_2=CF(OCF_3)$, $CF_2=CF(OC_2F_5)$, $CF_2=CF(OC_3F_7)$, $CF_2=CF(OC_4F_9)$, and $CF_2=CF(OC_3F_{11})$. Preferred among these are $CF_2=CF_2$, $CF_2=CF(CF_3)$, $CF_2=CF(OCF_3)$, $CF_2=CF(OC_2F_5)$, and $CF_2=CF(OC_3F_7)$.

In the step A, the solution containing a perfluoromonomer and a non-polymerizable solvent may further contain a

monomer copolymerizable with the perfluoromonomer.

Usable examples of the monomer copolymerizable with the perfluoromonomer include a fluorine-containing monomer other than the perfluoromonomer and a fluorine-free monomer.

Examples of the fluorine-containing monomer other than the perfluoromonomer include fluorine-containing acrylic monomers (other than perfluoroacrylic monomers), fluorine-containing styrene monomers (other than perfluorostyrene monomers), and fluorine-containing olefins (other than perfluoroolefins).

The fluorine-free monomer may be a monofunctional monomer or a multifunctional monomer.

Examples of fluorine-free monomers corresponding to multifunctional monomers include di(meth)acrylates such as ethylene glycol di(meth)acrylate, diethylene glycol di(meth)acrylate, triethylene glycol di(meth)acrylate, 1,6-hexanediol di(meth)acrylate, and trimethylolpropane di(meth)acrylate; tri(meth)acrylates such as trimethylolpropane tri(meth) acrylate, ethylene oxidemodified trimethylolpropane tri(meth)acrylate, and pentaerythritol tri(meth)acrylate; diaryl compounds or triaryl compounds such as pentaerythritol tetra(meth)acrylate, dipentaerythritol hexa(meth)acrylate, diaryl phthalate, diaryl maleate, diaryl fumarate, diaryl succinate, and triaryl isocyanurate; divinyl compounds such as divinylbenzene, butadiene, 1,6-hexanediol divinyl ether, 1,4-butanediol divinyl ether, cyclohexanedimethanol divinyl ether, diethylene glycol divinyl ether, and triethylene glycol divinyl ether; di-$\alpha$-fluoroacrylates such as ethylene glycol di-$\alpha$-fluoroacrylate, diethylene glycol di-$\alpha$-fluoroacrylate, triethylene glycol di-$\alpha$-fluoroacrylate, 1,6-hexanediol di-$\alpha$-fluoroacrylate, and trimethylolpropane di-$\alpha$-fluoroacrylate; tri-$\alpha$-fluoroacrylates such as trimethylolpropane tri-$\alpha$-fluoroacrylate, ethylene oxidemodified trimethylolpropane tri-$\alpha$-fluoroacrylate, and pentaerythritol tri-$\alpha$-fluoroacrylate; tetra-$\alpha$-fluoroacrylates such as pentaerythritol tetra-$\alpha$-fluoroacrylate; and hexa-$\alpha$-fluoroacrylates such as dipentaerythritol hexa-$\alpha$-fluoroacrylate. One of these may be used alone or two or more of these may be used in the form of mixture. Preferred among these are divinyl ethers such as 1,4-butanediol divinyl ether, cyclohexanedimethanol divinyl ether, and diethylene glycol divinyl ether.

Examples of fluorine-free monomers corresponding to monofunctional monomers include alkyl (meth)acrylates such as methyl (meth)acrylate, ethyl (meth)acrylate, propyl (meth)acrylate, butyl (meth)acrylate, cumyl (meth)acrylate, cyclohexyl (meth)acrylate, myristyl (meth)acrylate, palmityl (meth)acrylate, stearyl (meth)acrylate, lauryl (meth)acrylate, and isobornyl (meth)acrylate; polar groupcontaining (meth)acrylic monomers such as (meth)acrylonitrile, (meth)acrylamide, (meth)acrylic acid, glycidyl (meth)acrylate, 2-hydroxyethyl methacrylate, and 2-hydroxypropyl methacrylate; aromatic vinyl monomers such as styrene, $\alpha$-methylstyrene, p-methylstyrene, and p-chlorostyrene; vinyl esters such as vinyl acetate, vinyl benzoate, vinyl neononanoate (trade name VeoVa 9), vinyl neodecanoate (trade name VeoVa 10), and vinyl propionate; vinyl ethers such as methyl vinyl ether, ethyl vinyl ether, butyl vinyl ether, and hydroxybutyl vinyl ether; halogencontaining monomers such as vinyl chloride and vinylidene chloride; vinylpyridine, 2-acryloyloxyethyl phthalic acid, itaconic acid, fumaric acid, ethylene, propylene, and a polydimethylsiloxane macromonomer. Of these, vinyl ethers such as methyl vinyl ether, ethyl vinyl ether, butyl vinyl ether, and hydroxybutyl vinyl ether are preferred as they can provide appropriate toughness to polymers. Vinyl esters such as vinyl benzoate, vinyl neononanoate (trade name Veova 9), vinyl neodecanoate (trade name Veova 10), and vinyl propionate are also preferred as they improve the miscibility with the perfluoromonomer.

In the step A, the solution containing a perfluoromonomer and a non-polymerizable solvent preferably contains the monomer(s) in an amount of 0.1 to 10 parts by mass, more preferably 0.5 to 5 parts by mass, still more preferably 0.8 to 3.5 parts by mass, relative to 1 part by mass of the non-polymerizable solvent.

In the case where a perfluoromonomer alone is polymerized, the amount of the monomer(s) contained means the amount of the perfluoromonomer used. In the case where a perfluoromonomer and a monomer copolymerizable with the perfluoromonomer are polymerized, the amount of the monomer(s) contained means the sum of the amounts of the perfluoromonomer and the monomer copolymerizable with the perfluoromonomer. The proportion of each monomer may be set as appropriate in accordance with the target perfluororesin.

The non-polymerizable solvent used is a solvent that can dissolve a perfluoromonomer and has low miscibility with the resulting perfluororesin. Low miscibility with the resulting perfluororesin can promote phase separation of the resulting perfluororesin, which enables production of a hollow fine particulate.

The non-polymerizable solvent has an SP value of 9.00 to 9.80 $(cal/cm^3)^{1/2}$. Upon preparation of a perfluororesin, a non-polymerizable solvent functions as a chain transfer agent. With the SP value within this range, the non-polymerizable solvent allows introduction of a hydrophilic group at one or more terminals of the perfluororesin. The lower limit of the SP value is preferably 9.20, more preferably 9.30 and the upper limit thereof is preferably 9.60, more preferably 9.50.

The SP value can be determined using the Fedors equation (Polym. Eng. Sci., 14[2], 147(1974)).

Examples of the non-polymerizable solvent include non-polymerizable fluorine-containing solvents such as fluorine-containing alcohols. Preferred is a fluorine-containing alcohol.

The fluorine-containing alcohol is preferably a compound represented by the following formula:

$$X-(CF_2)_n-(CH_2)_m-OH$$

(wherein X is H or F, n is 2 to 7, and m is 1 or 2) and having an SP value within the above range. Specific examples include the compounds in the following table.

The compound represented by this formula is preferably $F(CF_2)_n(CH_2)_mOH$ (wherein n = 2 to 4 and m = 1 or 2) or $H(CF_2)_n(CH_2)_mOH$ (wherein n = 5 to 7 and m = 1 or 2), more preferably $H(CF_2)_n(CH_2)_mOH$ (wherein n = 5 to 7 and m = 1 or 2).

[Table 1]

| Structural formula | SP value | X | n | m |
|---|---|---|---|---|
| H(CF2)5CH2OH | 9.74 | H | 5 | 1 |
| H(CF2)5(CH2)2OH | 9.64 | H | 5 | 2 |
| H(CF2)6CH2OH | 9.40 | H | 6 | 1 |
| H(CF2)6(CH2)2OH | 9.34 | H | 6 | 2 |
| H(CF2)7CH2OH | 9.13 | H | 7 | 1 |
| H(CF2)7(CH2)2OH | 9.09 | H | 7 | 2 |
| F(CF2)2(CH2)2OH | 9.69 | F | 2 | 2 |
| F(CF2)3CH2OH | 9.36 | F | 3 | 1 |
| F(CF2)3(CH2)2OH | 9.28 | F | 3 | 2 |
| F(CF2)4CH2OH | 9.01 | F | 4 | 1 |

In order to allow introduction of a hydrophilic group at one or more terminals of the polymer (perfluororesin) to further improve the hydrophilicity of the polymer, the fluorine-containing alcohol preferably has a hydrogen atom at the $\omega$ position. In other words, a compound of the formula wherein X = H is preferred. Specific examples of the fluorine-containing alcohols having a hydrogen atom at the $\omega$ position include $H(CF_2)_nCH_2OH$ (wherein n = 5 to 7). Preferred is $H(CF_2)_6CH_2OH$, $F(CF_2)_3CH_2OH$, or $F(CF_2)_4CH_2OH$, and particularly preferred is $H(CF_2)_6CH_2OH$.

One non-polymerizable solvent may be used alone or two or more non-polymerizable solvents may be used in combination.

The non-polymerizable solvent may be blended with another solvent within a range that the properties thereof are not impaired. The proportion of the non-polymerizable solvent in the total amount of the solvent(s) is preferably 80% by mass or higher, more preferably 90% by mass or higher, still more preferably 95% by mass or higher. The upper limit may be, but is not limited to, 100% by mass.

The non-polymerizable solvent may be used in an amount selected as appropriate within a wide range, and is commonly 0.1 to 10 parts by mass, preferably 0.5 to 5 parts by mass, relative to 1 part by mass of the monomer(s).

In the step A, the dispersion preferably contains a particulate dispersion stabilizer. The presence of a particulate dispersion stabilizer can further promote phase separation, enabling the production of a hollow fine particulate having a large particle size.

The particulate dispersion stabilizer may be preliminarily mixed with water before the step A or may be preliminarily mixed with the solution containing the perfluoromonomer and the non-polymerizable solvent before the step A. Alternatively, it may be added to water separately from the solution in the step A.

The particulate dispersion stabilizer used may be selected from a wide range of those having an effect of preventing aggregation of droplets formed by dispersing a solution containing a monomer component, a phase separation promoter, and a non-polymerizable solvent in water. Examples thereof include polymer dispersion stabilizers and fluorine-containing particulate dispersion stabilizers.

Examples of the polymer dispersion stabilizer include polyvinyl alcohol, methyl cellulose, ethyl cellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer. Of these, preferred are polyvinyl alcohol, polyvinylpyrrolidone, polyacrylic acid, and polymethacrylic acid, more preferred is polyvinyl alcohol and polyvinylpyrrolidone, and still more preferred is polyvinyl alcohol.

Examples of the fluorine-containing particulate dispersion stabilizer include a fluoropolymer ($\alpha$) of a monomer ($\alpha$) represented by the general formula ($\alpha$):

general formula (α):

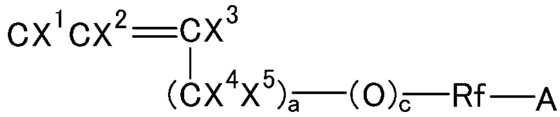

wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is -COOM, $-SO_3M$, $-OSO_3M$, or $-C(CF_3)_2OM$ (wherein M is H, a metal atom, $NR^7{}_4$, an optionally substituted imidazolium, an optionally substituted pyridinium, or an optionally substituted phosphonium; and $R^7$ is H or an organic group);

When a is 1, c is preferably 1; $X^1$ and $X^2$ are preferably each independently H or F, more preferably H; and $X^3$, $X^4$, and $X^5$ are preferably each independently H or F, more preferably F. When a is 0, c is preferably 1; $X^1$ and $X^2$ are preferably each independently H or F, more preferably F; and $X^3$, $X^4$, and $X^5$ are preferably each independently H or F, more preferably F.

Specifically, the monomer (α) is preferably at least one selected from the formula (1a): $CF_2$=CF-O-Rf-A and the formula (2a): $CH_2$=CF-$CF_2$-O-Rf-A because such a monomer (α) further improves the water solubility of the fluoropolymer.

When Rf in the formula is a C2-C100 fluorine-containing alkylene group containing an ether bond, it is an alkylene group that does not have an oxygen atom at its terminal and contains an ether bond between carbon atoms.

The carbon number of the fluorine-containing alkylene group is preferably 2 or more. The carbon number of the fluorine-containing alkylene group is preferably 30 or less, more preferably 20 or less, still more preferably 10 or less, particularly preferably 6 or less, most preferably 3 or less. Examples of the fluorine-containing alkylene group include $-CF_2-$, $-CH_2CF_2-$, $-CF_2CF_2-$, $-CF_2CF_2CF_2-$, - $CF_{2C}H_2-$, $-CF_2CF_2CH_2-$, $-CF(CF_3)-$, $-CF(CF_3)CF_2-$, and - $CF(CF_3)CH_2-$. The fluorine-containing alkylene group is preferably a perfluoroalkylene group.

When a is 1, the fluorine-containing alkylene group is preferably a branched perfluoroalkylene group. When a is 0, the fluorine-containing alkylene group is preferably an unbranched linear perfluoroalkylene group.

The carbon number of the fluorine-containing alkylene group containing an ether bond is preferably 3 or more. The carbon number of the fluorine-containing alkylene group containing an ether bond is preferably 60 or less, more preferably 30 or less, still more preferably 12 or less, particularly preferably 9 or less, most preferably 6 or less. The fluorine-containing alkylene group containing an ether bond is also preferably a divalent group represented by the general formula:

[Chem. 11]

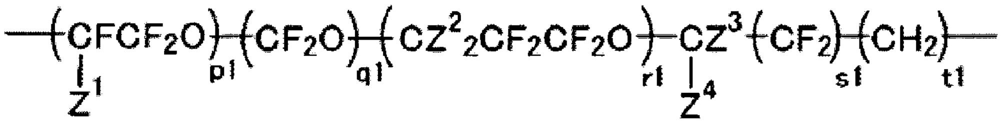

wherein $Z^1$ is F or $CF_3$; $Z^2$ and $Z^3$ are each independently H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group containing an ether bond include $-CF_2CF(CF_3)OCF_2CF_2-$, $-CF(CF_3)CF_2-O-CF(CF_3)-$, - $(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$(wherein n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, - $CF_2CF_2CF_2O-CF_2CF_2CH_2-$, $-CF_2CF_2O-CF_2-$, and $-CF_2CF_2O-CF_2CH_2-$. The fluorine-containing alkylene group containing an ether bond is preferably a perfluoroalkylene group.

The carbon number of the fluorine-containing alkylene group containing a keto group is preferably 3 or more. The carbon number of the fluorine-containing alkylene group containing a keto group is preferably 60 or less, more preferably 30 or less, still more preferably 12 or less, particularly preferably 5 or less.

Specific examples of the fluorine-containing alkylene group containing a keto group include $-CF_2CF(CF_3)CO-CF_2-$, - $CF_2CF(CF_3)CO-CF_2CF_2-$, $-CF_2CF(CF_3)CO-CF_2CF_2CF_2-$, and - $CF_2CF(CF_3)CO-CF_2CF_2CF_2CF_2-$. The fluorine-containing alkylene group containing a keto group is preferably a perfluoroalkylene group.

Water may be added to the keto group in the fluorine-containing alkylene group. Thus, the monomer (α) may be a hydrate. Examples of the fluorine-containing alkylene group containing a water-added keto group include - $CF_2CF(CF_3)C(OH)_2-CF_2-$, $-CF_2CF(CF_3)C(OH)_2-CF_2CF_2-$, - $CF_2CF(CF_3)C(OH)_2-CF_2CF_2CF_2-$, and $-CF_2CF(CF_3)C(OH)_2-CF_2CF_2CF_2CF_2-$ .

In the formula, A is -COOM, $-SO_3M$, $-OSO_3M$, or - $C(CF_3)_2OM$, preferably -COOM or $-SO_3M$, more preferably

$-SO_3M$.

M is H, a metal atom, $NR^7_4$, an optionally substituted imidazolium, an optionally substituted pyridinium, or an optionally substituted phosphonium. $R^7$ is H or an organic group.

Examples of the metal atom include an alkali metal (Group 1) and an alkaline earth metal (Group 2). The metal atom is preferably Na, K, or Li.

M is preferably H, a metal atom, or $NR^7_4$, more preferably H, an alkali metal (Group 1), an alkaline earth metal (Group 2), or $NR^7_4$, still more preferably H, Na, K, Li, or $NH_4$, further preferably H, Na, K, or $NH_4$, most preferably H, Na, or $NH_4$.

Examples of the $CF_2$=CF-O-Rf-A (formula (1a)) include $CF_2=CFOCF_2COOM$, $CF_2=CFOCF_2CF_2COOM$, $CF_2=CFO(CF_2)_3COOM$, $CF_2=CFOCF_2CF_2SO_3M$, $CF_2=CFOCF_2SO_3M$, $CF_2=CFOCF_2CF_2CF_2SO_3M$, $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$ (wherein M is H, $NH_4$, or an alkali metal).

Preferred among these are $CF_2=CFOCF_2COOM$, $CF_2=CFOCF_2CF_2COOM$, $CF_2=CFO(CF_2)_3COOM$, $CF_2=CFOCF_2CF_2SO_3M$, $CF_2=CFOCF_2SO_3M$, $CF_2=CFOCF_2CF_2CF_2SO_3M$, and $CH_2=CFCF_2OCF(CF_3)COOM$ (wherein M is H, $NH_4$, or an alkali metal).

Preferred examples of the $CH_2$=CF-$CF_2$-O-Rf-A (formula 2a) include

[Chem. 12]

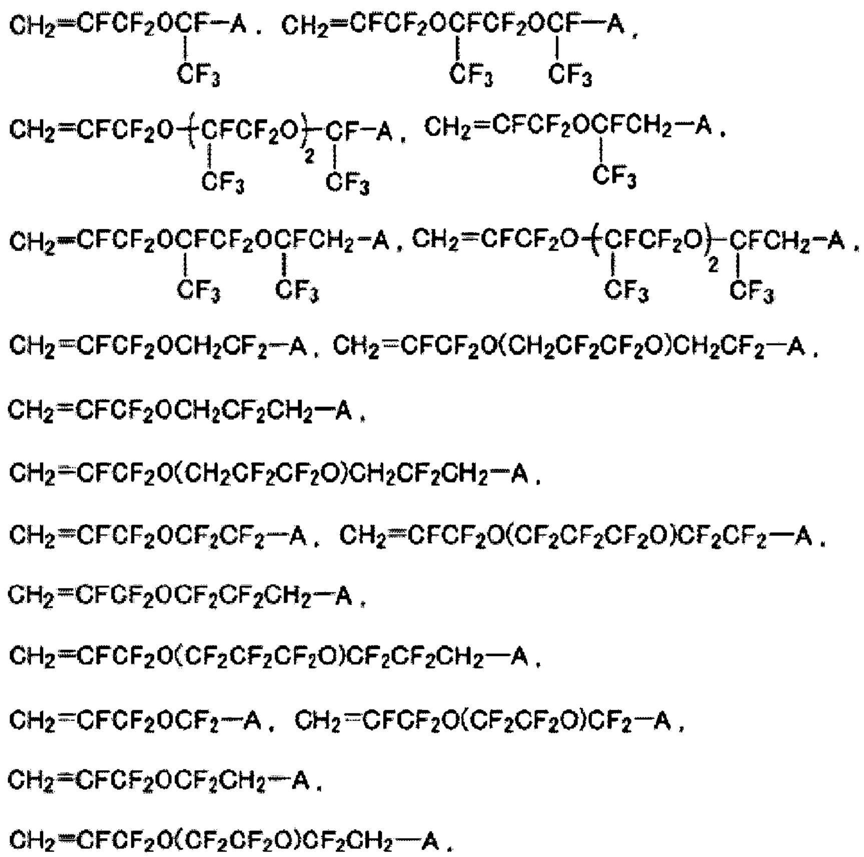

Of these,

[Chem. 13]

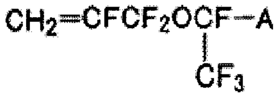, 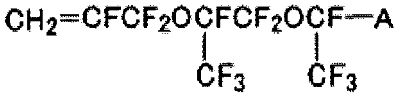,

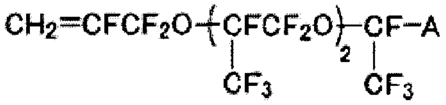, 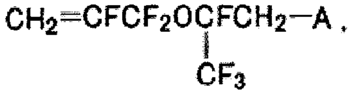,

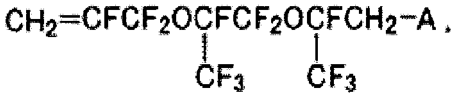, 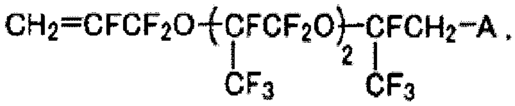,

are preferred.

The monomer represented by the general formula (2a) is preferably a monomer of the formula (2a) in which A is -COOM. In particular, it is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), more preferably $CH_2=CFCF_2OCF(CF_3)COOM$.

The monomer (α) may be copolymerized with a different monomer. Specifically, the fluoropolymer (α) may be a homopolymer of the monomer represented by the general formula (α) or may be a copolymer with a different monomer. The fluoropolymer (α) may contain a polymerized unit (α) based on two or more different monomers represented by the general formula (α).

The different monomer is preferably a monomer represented by the general formula $CFR=CR_2$ (wherein Rs are each independently H, F, or a C1-C4 perfluoroalkyl group). The different monomer is preferably a C2 or C3 fluorine-containing ethylenic monomer. Examples of the different monomer include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E isomer), and $CHF=CHCF_3$ (Z isomer).

The different monomer is preferably at least one selected from the group consisting of tetrafluoroethylene ($CF_2=CF_2$), chlorotrifluoroethylene ($CF_2=CFCl$), and hexafluoropropylene ($CF_2=CFCF_3$) because they are well copolymerizable, more preferably tetrafluoroethylene. Thus, the polymerized unit based on the different monomer is preferably a polymerized unit based on tetrafluoroethylene. Expressed polymerized units based on the different monomers may be the same as or different from each other. The fluoropolymer may contain polymerized units based on two or more different monomers.

Examples of the different monomer also include monomers represented by the general formula (n1-2):

[Chem. 14]

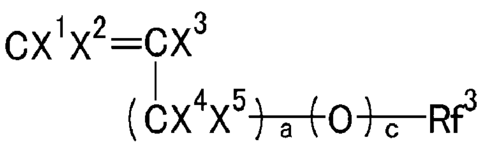 (n1-2)

wherein $X^1$ and $X^2$ are the same as or different from each other and are each independently H or F; $X^3$ is H, F, Cl, $CH_3$ or $CF_3$; $X^4$ and $X^5$ are the same as or different from each other and are each independently H or F; a and c are the same as or different from each other and are each independently 0 or 1; and $Rf^3$ is a C1-C40 fluorine-containing alkyl group or a C2-C100 fluorine-containing alkyl group containing an ether bond.

Specific preferred examples include $CH_2=CFCF_2-O-Rf^3$, $CF_2=CF-O-Rf^3$, $CF_2=CFCF_2-O-Rf^3$, $CF_2=CF-Rf^3$, $CH_2=CH-Rf^3$, and $CH_2=CH-O-Rf^3$ (wherein $Rf^3$ is as described for the formula (n1-2)).

The fluoropolymer (β) contains the polymerized unit (β) in an amount, in order of preference with the latter being more preferred, of 50 mol% or more, 60 mol% or more, 70 mol% or more, 80 mol% or more, 90 mol% or more, or 99 mol% or more, of all polymerized units. Particularly preferably, the amount of the polymerized unit (β) is substantially 100 mol%. Most preferably, the fluoropolymer (β) consists only of the polymerized unit (β). The fluoropolymer (β) containing a larger amount of the polymerized unit (β) advantageously has higher water solubility.

The fluoropolymer (β) contains a polymerized unit based on a different monomer copolymerizable with the monomer (β) in an amount, in order of preference with the latter being more preferred, of 50 mol% or less, 40 mol% or less, 30 mol% or less, 20 mol% or less, 10 mol% or less, or 1 mol% or less, of all polymerized units. Particularly preferably, the amount of the polymerized unit based on a different monomer copolymerizable with the monomer (β) is substantially 0 mol%. Most preferably, the fluoropolymer (β) does not contain a polymerized unit based on the different monomer.

The lower limit of the weight average molecular weight (Mw) of the fluoropolymer (β) is, in order of preference with the latter being more preferred, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, or $5.1 \times 10^4$ or more. The upper limit of the weight average molecular weight (Mw) of the fluoropolymer is, in order of preference with the latter being more preferred, $150.0 \times 10^4$ or less, $100.0 \times 10^4$ or less, $60.0 \times 10^4$ or less, or $50.0 \times 10^4$ or less.

The lower limit of the number average molecular weight (Mn) of the fluoropolymer (β) is, in order of preference with the latter being more preferred, $0.7 \times 10^4$ or more, $0.9 \times 10^4$ or more, $1.0 \times 10^4$ or more, $1.2 \times 10^4$ or more, $1.4 \times 10^4$ or more, $1.6 \times 10^4$ or more, or $1.8 \times 10^4$ or more. The upper limit of the number average molecular weight (Mn) of the fluoropolymer is, in order of preference with the latter being more preferred, $75.0 \times 10^4$ or less, $50.0 \times 10^4$ or less, $40.0 \times 10^4$ or less, $30.0 \times 10^4$, or $20.0 \times 10^4$ or less.

The molecular weight distribution (Mw/Mn) of the fluoropolymer (β) is preferably 3.0 or less, more preferably 2.4 or less, still more preferably 2.2 or less, particularly preferably 2.0 or less, most preferably 1.9 or less.

The fluoropolymer (β) usually has terminal groups. The terminal groups are generated during polymerization. Typical terminal groups are independently selected from hydrogen, iodine, bromine, a linear or branched alkyl group, and a linear or branched fluoroalkyl group and may optionally further contain at least one catenary heteroatom. The alkyl group and the fluoroalkyl group each preferably have 1 to 20 carbon atoms. The terminal groups are typically generated from an initiator or a chain transfer agent used in the formation of the fluoropolymer (β) or generated during a chain transfer reaction.

Examples of the fluorine-containing particulate dispersion stabilizer also include an anionic fluorine-containing surfactant. Examples of the anionic fluorine-containing surfactant include surfactants represented by the formula (1):

$$Rf\S(X^-)_j(M^+) \qquad \text{formula (1)}$$

wherein Rf§ is a C1-C30 (per)fluoroalkyl chain or a (per) fluoro (poly) oxyalkylene chain; $X^-$ is $-COO^-$, $-PO_3^-$, or $-SO_3^-$; $M^+$ is selected from $H^+$, $NH_4^+$, and an alkali metal ion; and j is optionally 1 or 2.

Specific examples of the anionic fluorine-containing surfactant include ammonium (per)fluoro(oxy) carboxylate, sodium ammonium (per)fluoro(oxy) carboxylate, and (per)fluoro(poly)oxyalkylene having one or more carboxyl terminal group(s).

Examples of the fluorine-containing surfactant, particularly the (per)fluorooxyalkylene surfactant, are described in U.S. Patent Application Publication No. 2007/015864 (3M Innovative Properties Co.) 8/01/2007, U.S. Patent Application Publication No. 2007/015865 (3M Innovative Properties Co.) 18/01/2007, U.S. Patent Application Publication No. 2007/015866 (3M Innovative Properties Co.) 18/01/2007, and U.S. Patent Application Publication No. 2007/025902 (3M Innovative Properties Co.) 1/02/2007.

The fluorine-containing particulate dispersion stabilizer may be a fluorine-containing surfactant with a molecular weight of an anionic portion of 800 or less.

The term "anionic portion" refers to a portion excluding cations in the anionic fluorine-containing surfactant. The anionic portion in the formula (1) is the "Rf§($X^-$)j" portion.

The particulate dispersion stabilizer is preferably a fluorine-containing particulate dispersion stabilizer among those described above, such as fluoropolymers of the monomers represented by the following formulas wherein M is H, $NH_4$ or an alkali metal:
$CF_2=CFOCF_2COOM$, $CF_2=CFOCF_2CF_2COOM$, $CF_2=CFO(CF_2)_3COOM$, $CF_2=CFOCF_2CF_2SO_3M$, $CF_2=CFOCF_2SO_3M$, $CF_2=CFOCF_2CF_2CF_2SO_3M$, $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2SO_3M$, $CF_2=CFOCF_2CF(CF_3)OCF_2CF_2SO_3M$, $CF_2=CFOCF_2CF(CF_3)OCF_2CF_2CF_2SO_3M$, $CH_2=CF-CF_2-OCF(CF_3)COOM$, $CH_2=CF-CF_2-OCF(CF_3)SO_3M$, $CH_2=CF-CF_2-OCF(CF_3)CF_2OCF(CF_3)COOM$, $CH_2=CF-CF_2-O(CF(CF_3)CF_2O)_2CF(CF_3)COOM$, $CH_2=CF-CF_2-OCF(CF_3)CF_2OCF(CF_3)SO_3M$, and $CH_2=CF-CF_2-O(CF(CF_3)CF_2O)_2CF(CF_3)SO_3M$.

In particular, preferred monomers are $CF_2=CFOCF_2COOM$, $CF_2=CFOCF_2CF_2COOM$, $CF_2=CFO(CF_2)_3COOM$, $CF_2=CFOCF_2CF_2SO_3M$, $CF_2=CFOCF_2SO_3M$, $CF_2=CFOCF_2CF_2CF_2SO_3M$, $CH_2=CFCF_2OCF(CF_3)COOM$, and $CH_2=CFCF_2OCF(CF_3)CF_2OCF(CF_3)COOM$.

The particulate dispersion stabilizer used preferably includes at least one fluorine-containing particulate dispersion stabilizer selected from the group consisting of a fluoropolymer (α) of a monomer (α) represented by the general formula (α) and an anionic fluorine-containing surfactant represented by the general formula (1). More preferably, the fluorine-containing particulate dispersion stabilizer is used in combination with at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydrooxystearic acid-g-methyl methacrylate-co-methacrylic acid) copolymer.

The fluorine-containing particulate dispersion stabilizer is preferably a fluoropolymer (α), more preferably a

fluoropolymer (α) represented by (formula 1a): $CF_2$=CF-O-Rf-A.

The polymer dispersion stabilizer is preferably polyvinyl alcohol, polyvinylpyrrolidone, polyacrylic acid, or polymethacrylic acid, more preferably polyvinyl alcohol.

The amount of the particulate dispersion stabilizer per 100 parts by mass of the solution is preferably 0.0001 to 10 parts by mass, more preferably 0.005 to 5 parts by mass.

In the step A, the phase separation promoter content of the solution is preferably as small as possible for better electric properties. The phase separation promoter content in 1 part by mass of the solution is preferably 0.005 parts by mass or lower, more preferably 0.001 parts by mass or lower. The lower limit is not limited and may be 0 parts by mass.

The step A is a step of dispersing in water a solution containing a perfluoromonomer, a non-polymerizable solvent, and optional components such as a monomer copolymerizable with the perfluoromonomer, an initiator, and a dispersion stabilizer to obtain a dispersion.

The dispersing may be performed by, for example, a variety of known methods such as dispersing by mechanical shearing force using a homogenizer or employing membrane emulsification. The dispersing may be performed under a temperature condition of 0°C or higher and lower than 100°C, preferably 0°C to 90°C. In the case where the solution in the dispersing contains an initiator, the temperature needs to be not higher than the temperature that affects decomposition of the initiator used, and is typically around room temperature or lower, particularly preferably about 0°C to about 30°C.

In the step A, usually, droplets formed by dispersion of the solution are not monodispersed but are commonly in the form of mixture of droplets having various, different particle sizes. Thus, particles of a hollow fine particulate finally obtained also have different particle sizes.

Alternatively, a dispersion method may be selected so as to achieve droplets of a uniform size and provide monodispersed droplets. An exemplary method for forming such monodispersed droplets is a method of producing monodispersed droplets by membrane emulsification using porous glass (SPG). In the case of producing such monodispersed droplets having a uniform particle size, particles of a hollow fine particulate finally obtained are also monodispersed with a uniform particle size.

In either case, the average particle size of the droplets is determined as appropriate in accordance with a desired average particle size of the hollow fine particulate.

The step A also preferably includes a dispersing step A-1 in which the solution is dispersed in water at a temperature of 50°C or higher (preferably 55°C or higher, more preferably 60°C or higher, still more preferably 65°C or higher) to provide a dispersion or a dispersing step A-2 in which the solution is dispersed in water at a temperature of lower than 50°C to obtain a dispersion and then the dispersion is heated to 50°C or higher (preferably 55°C or higher, more preferably 60°C or higher, still more preferably 65°C or higher).

The upper limit of the temperature in both the steps A-1 and A-2 is preferably 100°C or lower, more preferably 95°C or lower, still more preferably 90°C or lower.

These steps each enable efficient progress of polymerization without phase separation of the dispersion even when the perfluoromonomer is used.

Preferably, a polymerization initiator is used in the production method of the disclosure. The polymerization initiator may be added to the solution before the step A or may be added to the dispersion after the dispersing in the step A and before the step B. In the case where the dispersing is performed at a relatively high temperature (e.g., 50°C or higher) as described above and the polymerization initiator is added to the solution before the step A, polymerization may undesirably start in the dispersing. Therefore, the polymerization initiator is preferably added to the dispersion after the dispersing in the step A and before the step B. This allows the dispersing in the step A to be performed at a relatively high temperature.

The polymerization initiator initiates polymerization of a monomer in droplets formed by dispersing the solution in water. Conventional polymerization initiators such as oil-soluble initiators are usable. Examples include radical polymerization initiators, for example, azo compounds such as azobisisobutyronitrile, 2,2'-azobis(2-methylbutyronitrile), 2,2'-azobis(4-methoxy-2,4-dimethylvaleronitrile), and 2,2'-azobis(N-butyl-2-methylpropionamide), and peroxides such as cumene hydroperoxide, t-butyl hydroperoxide, dicumyl peroxide, dit-butyl peroxide, benzoyl peroxide, and lauroyl peroxide.

A photopolymerization initiator that initiates polymerization by light, such as ultraviolet rays, is also usable. The photopolymerization initiator may be, but not limited to, a conventionally used one.

The azo compound is preferably at least one selected from the group consisting of 2,2'-azobis(methyl isobutyrate), 2,2'-azobis(4-methoxy-2,4-dimethylvaleronitrile), and azobisisobutyronitrile, more preferably 2,2'-azobis(methyl isobutyrate).

Examples of the polymerization initiator also include compounds represented by the following formulas (C1), (C2), and (C3) (herein, also referred to as "compound (C1)", "compound (C2)", and "compound (C3)", respectively) and inorganic peroxides. The compound (C1) to the compound (C3) and the inorganic peroxides may each be used alone or may be used in combination.

[Chem. 15]

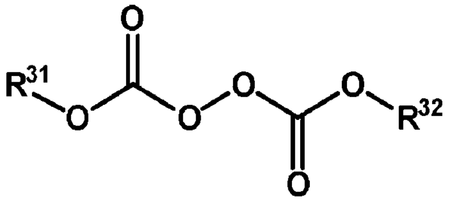

(C1)

In the formula, $R^{31}$ and $R^{32}$ may be the same as or different from each other and each independently a group obtained by replacing at least one fluorine atom with a hydrogen atom in a C3-C10 perfluoroalkyl group optionally substituted with perfluorophenyl or a group obtained by replacing at least one fluorine atom with a hydrogen atom in perfluorophenyl optionally substituted with a linear or branched C1-C4 perfluoroalkyl group.

[Chem. 16]

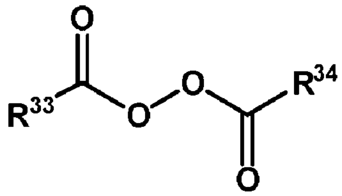

(C2)

In the formula, $R^{33}$ and $R^{34}$ may be the same as or different from each other and each independently a group obtained by replacing at least one fluorine atom with a hydrogen atom in a C3-C10 perfluoroalkyl group optionally substituted with perfluorophenyl or a group obtained by replacing at least one fluorine atom with a hydrogen atom in perfluorophenyl optionally substituted with a linear or branched C1-C4 perfluoroalkyl group.

[Chem. 17]

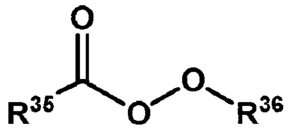

(C3)

In the formula, $R^{35}$ and $R^{36}$ may be the same as or different from each other and each independently a group obtained by replacing at least one fluorine atom with a hydrogen atom in a C1-C10 perfluoroalkyl group optionally substituted with perfluorophenyl or a group obtained by replacing at least one fluorine atom with a hydrogen atom in perfluorophenyl optionally substituted with a linear or branched C1-C4 perfluoroalkyl group.

$R^{31}$ and $R^{32}$ are preferably the same as or different from each other and each independently a group obtained by replacing at least one fluorine atom with a hydrogen atom in perfluoropropyl, perfluoroisopropyl, perfluoro 2-phenyl-2-propyl, perfluorobutyl, perfluoro sec-butyl, perfluoro tert-butyl, perfluoropentyl, perfluoroisopentyl, perfluoroneopentyl, perfluoro 2-methyl-2-pentyl, perfluoro 2,4,4-trimethyl-2-pentyl, perfluorohexyl, perfluoro 2-methylhexyl, perfluoro 2-ethylhexyl, perfluorocyclohexyl, perfluoro 4-methylcyclohexyl, perfluoro 4-ethylcyclohexyl, perfluoro 4-tert-butylcyclohexyl, perfluoroheptyl, perfluoro 2-heptyl, perfluoro 3-heptyl, perfluorooctyl, perfluoro 2-methyl-2-octyl, perfluorononyl, perfluorodecyl, perfluorophenyl, perfluoro 2-methylphenyl, perfluoro 3-methylphenyl, or perfluoro 4-methylphenyl.

The number of fluorine atom(s) replaced with hydrogen atom(s) in $R^{31}$ or $R^{32}$ is one to the maximum number of replacement possible, preferably a number smaller by three than the maximum number of replacement possible to the maximum number of replacement possible, more preferably a number smaller by two than the maximum number of replacement possible to the maximum number of replacement possible, still more preferably a number smaller by one than the maximum number of replacement possible to the maximum number of replacement possible, particularly preferably the maximum number of replacement possible.

$R^{31}$ and $R^{32}$ may be the same as or different from each other and are more preferably each independently propyl, isopropyl, sec-butyl, 2-ethylhexyl, or 4-tert-butylcyclohexyl.

$R^{31}$ and $R^{32}$ may be the same as or different from each other and are particularly preferably each independently propyl or isopropyl.

Preferred examples of the compound (C1) include di-n-propyl peroxydicarbonate, diisopropyl peroxydicarbonate, di-sec-butyl peroxydicarbonate, bis(4-tertbutylcyclohexyl)peroxydicarbonate, and di-2-ethylhexyl peroxydicarbonate.

The compound (C1) is particularly preferably di-n-propyl peroxydicarbonate or diisopropyl peroxydicarbonate.

$R^{33}$ and $R^{34}$ are preferably the same as or different from each other and each independently a group obtained by replacing at least one fluorine atom with a hydrogen atom in perfluoropropyl, perfluoroisopropyl, perfluoro 2-phenyl-2-propyl, perfluorobutyl, perfluoro sec-butyl, perfluoro tert-butyl, perfluoropentyl, perfluoro isopentyl, perfluoro neopentyl, perfluoro 2-methyl-2-pentyl, perfluoro 2,4,4-trimethyl-2-pentyl, perfluorohexyl, perfluoro 2-methylhexyl, perfluoro 2-ethylhexyl, perfluorocyclohexyl, perfluoro 4-methylcyclohexyl, perfluoro 4-ethylcyclohexyl, perfluoro 4-tert-butylcyclohexyl, perfluoroheptyl, perfluoro 2-heptyl, perfluoro 3-heptyl, perfluorooctyl, perfluoro 2-methyl-2-octyl, perfluorononyl, perfluorodecyl, perfluorophenyl, perfluoro 2-methylphenyl, perfluoro 3-methylphenyl, or perfluoro 4-methylphenyl.

The number of fluorine atom(s) replaced with hydrogen atom(s) in $R^{33}$ or $R^{34}$ is one to the maximum number of replacement possible, preferably a number smaller by three than the maximum number of replacement possible to the maximum number of replacement possible, more preferably a number smaller by two than the maximum number of replacement possible to the maximum number of replacement possible, still more preferably a number smaller by one than the maximum number of replacement possible to the maximum number of replacement possible.

$R^{33}$ and $R^{34}$ may be the same as or different from each other and are more preferably each independently isopropyl, 2,4,4-trimethylpentyl, $\omega$-hydro-dodecafluorohexyl, $\omega$-hydro-hexadecafluorooctyl, phenyl, or 3-methylphenyl.

Preferred examples of the compound (C2) include diisobutyryl peroxide, di(3,5,5-trimethylhexanoyl)peroxide, di($\omega$-hydro-dodecafluoroheptanoyl)peroxide, di($\omega$-hydro-hexadecafluorononanoyl)peroxide, $\omega$-hydro-dodecafluoroheptanoyl-$\omega$-hydrohexadecafluorononanoyl-peroxide, benzoyl peroxide, benzoyl m-methylbenzoyl peroxide, and m-toluoyl peroxide.

The compound (C2) is particularly preferably diisobutyryl peroxide, di($\omega$-hydro-dodecafluoroheptanoyl)peroxide, di($\omega$-hydro-hexadecafluoro nonanoyl)peroxide, $\omega$-hydro-dodecafluoroheptanoyl-$\omega$-hydrohexadecafluorononanoyl-peroxide, or benzoyl peroxide.

$R^{35}$ and $R^{36}$ are preferably the same as or different from each other and each independently a group obtained by replacing at least one fluorine atom with a hydrogen atom in perfluoromethyl, perfluroethyl, perfluoropropyl, perfluoroisopropyl, perfluoro 2-phenyl-2-propyl, perfluorobutyl, perfluoro sec-butyl, perfluoro tert-butyl, perfluoropentyl, perfluoroisopentyl, perfluoroneopentyl, perfluoro 2-methyl-2-pentyl, perfluoro 2,4,4-trimethyl-2-pentyl, perfluorohexyl, perfluoro 2-methylhexyl, perfluoro 2-ethylhexyl, perfluorocyclohexyl, perfluoro 4-methylcyclohexyl, perfluoro 4-ethylcyclohexyl, perfluoro 4-tert-butylcyclohexyl, perfluoroheptyl, perfluoro 2-heptyl, perfluoro 3-heptyl, perfluorooctyl, perfluoro 2-methyl-2-octyl, perfluorononyl, perfluorodecyl, perfluorophenyl, perfluoro 2-methylphenyl, perfluoro 3-methylphenyl, or perfluoro 4-methylphenyl.

The number of fluorine atom(s) replaced with hydrogen atom(s) in $R^{35}$ or $R^{36}$ is one to the maximum number of replacement possible, preferably a number smaller by three than the maximum number of replacement possible to the maximum number of replacement possible, more preferably a number smaller by two than the maximum number of replacement possible to the maximum number of replacement possible, still more preferably a number smaller by one than the maximum number of replacement possible to the maximum number of replacement possible, particularly preferably the maximum number of replacement possible.

$R^{35}$ and $R^{36}$ may be the same as or different from each other and are more preferably each independently isopropyl, 2-phenyl-2-propyl, tert-butyl, 2-methyl-2-pentyl, 2,4,4-trimethyl-2-pentyl, 2-heptyl, 2-methyl-2-octyl, phenyl, or 3-methylphenyl.

Preferred examples of the compound (C3) include tert-butyl peroxyneodecanoate, tert-butyl peroxypivalate, tert-hexyl peroxypivalate, tert-butyl peroxy isopropyl carbonate, and tert-butyl peroxyacetate.

The compound (C3) is particularly preferably tert-butyl peroxypivalate or tert-hexyl peroxypivalate.

Preferred examples of the inorganic peroxide include ammonium salts, sodium salts, and potassium salts of persulfuric acid, perboric acid, perchloric acid, perphosphoric acid, percarbonate, or permanganate.

The inorganic peroxide is particularly preferably ammonium persulfate, sodium persulfate, or potassium persulfate.

These inorganic peroxides may each be used alone or may be used in combination. The inorganic peroxide may be used in combination with a reducing agent such as a sulfite reducing agent (e.g. sodium dithionite) or a sulfite reducing agent (e.g. sodium sulfite, ammonium sulfite, or sodium hydrogen sulfite).

Particularly preferred examples of the polymerization initiator include an initiator having an ester group at a terminal. Introduction of the ester group of the initiator at a terminal of the polymer (perfluororesin) further improves the hydrophilicity of the polymer.

In the initiator, the ester group may be present at one terminal, preferably at both terminals. The ester group is preferably a group represented by -COOR where R is an unbranched alkyl group. The alkyl group for R is preferably a C1-C5 alkyl group, more preferably a C1-C3 alkyl group, still more preferably a methyl group.

Examples of the initiator include azo compounds having an ester group at a terminal and peroxides having an

ester group at a terminal.

The initiator preferably contains neither a fluorine atom nor an aromatic ring.

The amount of the initiator used may be appropriately adjusted in accordance with the type of the target perfluororesin, for example. The amount is preferably 0.1% by mass or more, more preferably 1% by mass or more, still more preferably 2% by mass or more, while it is preferably 20% by mass or less, more preferably 15% by mass or less, still more preferably 10% by mass or less, based on the total amount of the monomer(s) used.

The step B is a step of polymerizing the perfluoromonomer to obtain a phase-separated fine particulate containing a perfluororesin. It is sufficient that the step B includes polymerization of the perfluoromonomer. The perfluoromonomer alone may be polymerized, or the perfluoromonomer and the above-described monomer copolymerizable with the perfluoromonomer may be polymerized.

The polymerization in the step B may be performed in conformity with a conventionally known polymerization method such as micro-emulsion polymerization, mini-emulsion polymerization, or micro-suspension polymerization.

Polymerization in the step B may also be suspension polymerization. Suspension polymerization of the dispersion of the solution can be performed by heating the dispersion under stirring.

The polymerization temperature may be any temperature enough to initiate polymerization of the perfluoromonomer (and an optional monomer copolymerizable with the perfluoromonomer) by an initiator, and is commonly 10°C to 90°C, preferably 30°C to 80°C, more preferably 30°C to 75°C.

The polymerization is performed until a desired hollow fine particulate is obtained. The polymerization time varies in accordance with factors such as the types of the fluorine-containing monomer (and an optional monomer copolymerizable with the fluorine-containing monomer), the polymerization initiator, and the non-polymerizable solvent used, and is commonly about 3 to 24 hours.

The polymerization is preferably performed in an atmosphere of inert gas such as nitrogen gas or argon.

Polymerization performed as described above enables polymerization of the perfluoromonomer (or the perfluoromonomer and a monomer copolymerizable with the perfluoromonomer) in droplets of the solution.

The presence of the non-polymerizable solvent promotes phase separation of the resulting polymer (phase-separated fine particulate), which results in formation of a monolayer structured shell and a core including the non-polymerizable solvent therein. The shell in the phase-separated fine particulate includes a perfluororesin containing a polymerized unit based on the perfluoromonomer (or a polymerized unit based on the perfluoromonomer and a polymerized unit based on a monomer copolymerizable with the perfluoromonomer).

The perfluororesin has a glass transition temperature of preferably 60°C or higher, more preferably 120°C or higher because such a fluorine-containing resin can have a high strength and a high hardness.

In the disclosure, the glass transition temperature (Tg) can be determined using a differential scanning calorimeter (DSC) (DSC7000 available from Hitachi High-Tech Corp.) by increasing the temperature (first run), decreasing the temperature, and increasing the temperature (second run) within a temperature range from 30°C to 200°C at 10°C/min to obtain an endothermic curve, and determining the intermediate point of the endothermic curve as the glass transition temperature.

The perfluororesin may consist only of a polymerized unit based on the perfluoromonomer or may contain a polymerized unit based on the perfluoromonomer and a polymerized unit based on a monomer copolymerizable with the perfluoromonomer.

The perfluoromonomer and the monomer copolymerizable with the perfluoromonomer are as those described in the production method of the disclosure.

The perfluororesin preferably contains the polymerized unit based on the perfluoromonomer in an amount of 30% by mass or more, more preferably 40% by mass or more, still more preferably 50% by mass or more, of all polymerized units. The upper limit may be, but is not limited to, 100% by mass. The amount of the polymerized unit based on the perfluoromonomer within the above range allows the resulting hollow fine particulate to have excellent electric properties.

The perfluororesin preferably contains a polymerized unit based on a perfluoromonomer corresponding to a monofunctional monomer and a polymerized unit based on a multifunctional monomer (crosslinkable monomer). This strengthens the shell of the hollow fine particulate. The strengthened shell of the hollow fine particulate can have a small thickness and lead to a high porosity.

The multifunctional monomer may be any of a perfluoromonomer, a fluorine-containing monomer other than the perfluoromonomer, and a fluorine-free monomer. Still, the multifunctional monomer is preferably a perfluoromonomer. In other words, the perfluororesin preferably contains a polymerized unit based on a perfluoromonomer corresponding to a monofunctional monomer and a polymerized unit based on a perfluoromonomer corresponding to a multifunctional monomer (in particular, a perfluoromonomer represented by the formula (b)). This further strengthens the shell of the hollow fine particulate and achieves high electric properties.

The perfluororesin preferably contains the polymerized unit based on a multifunctional monomer (crosslinkable monomer) in an amount of 5% by mass or more, more preferably 10% by mass or more, still more preferably 30% by mass or more, of all polymerized units. The amount is preferably 70% by mass or less, more preferably 65% by mass or less, still

more preferably 55% by mass or less. The amount of a polymerized unit based on a crosslinkable monomer within the above range allows the resulting hollow fine particulate to have excellent strength and excellent electric properties.

The perfluororesin contains a polymerized unit based on a fluorine-free monomer in an amount of preferably 0 to 70% by mass, more preferably 0 to 50% by mass, of all polymerized units.

The perfluororesin contains a polymerized unit based on a fluorine-containing monomer other than the perfluoromonomer in an amount of preferably 0 to 70% by mass, more preferably 0 to 50% by mass, of all polymerized units.

The perfluororesin preferably contains a particulate dispersion stabilizer. The amount of the particulate dispersion stabilizer in the perfluororesin is preferably 0.01% by mass or more, more preferably 0.1% by mass or more, still more preferably 1% by mass or more. The amount is preferably 10% by mass or less, more preferably 5% by mass or less, still more preferably 3% by mass or less. The particulate dispersion stabilizer in an amount within the above range can increase the dispersion stability in water and provides excellent storage stability.

The particulate dispersion stabilizer is as described in the production method of the disclosure.

The perfluororesin preferably has a fluorine content of 10% by mass or higher. A fluorine content of 10% by mass or higher can lead to better electric properties and better water resistance. The fluorine content is more preferably 20% by mass or higher, still more preferably 30% by mass or higher, particularly preferably 50% by mass or higher. The hollow fine particulate containing such a perfluororesin can be produced by the production method of the disclosure described above, in particular a production method in which the step A includes the step A-1 or the step A-2.

The perfluororesin has a ratio by mass of a polymerized unit based on the monofunctional perfluoromonomer (perfluoroolefin) (C) to a polymerized unit based on the multifunctional perfluoromonomer (perfluoroolefin) (E) (C/E) of preferably 75/25 to 25/75, more preferably 70/30 to 30/70, still more preferably 60/40 to 40/60.

In the case where a multifunctional monomer other than the perfluoromonomer is used, the amount of the polymerized unit based on the monomer is included in (E). A preferred mass ratio in this case is the same as the ratio mentioned above.

The perfluororesin preferably has a relative permittivity (1 kHz) of 5.0 or lower. The relative permittivity is more preferably 4.0 or lower, still more preferably 3.7 or lower, particularly preferably 3.5 or lower. The lower limit of the relative permittivity may be, but is not limited to, 1.1 or higher, for example.

In the disclosure, the relative permittivity is a value determined by a measurement method in conformity with JIS C2138.

The perfluororesin preferably has a refractive index of 1.40 or lower. The refractive index is more preferably 1.39 or lower, particularly preferably 1.38 or lower. The lower limit of the refractive index may be, but is not limited to, 1.30 or higher, and is preferably 1.35 or higher from the viewpoint of solubility in a non-polymerizable solvent.

The refractive index is a value determined by the critical angle method.

The step C is a step of removing the non-polymerizable solvent in the phase-separated fine particulate to provide a hollow fine particulate. A hollow fine particulate containing substantially no non-polymerizable solvent can be obtained in the step C.

Non-limiting examples of the method of removing the non-polymerizable solvent include heat treatment, depressurization, natural drying, and freeze drying. In view of convenience and economy, heat treatment is preferred. Also preferred is freeze drying as it can easily maintain the hollow structure. The conditions of the heat treatment may be appropriately set depending on the type, amount, and the like of the non-polymerizable solvent. Preferably, the heat treatment is performed at a temperature of about 20°C to 300°C and a pressure of about 1 to 100000 Pa.

The production method of the disclosure including the step A to the step C enables production of a hollow fine particulate having a large particle size. The average particle size of the hollow fine particulate is preferably 1.0 μm or greater, more preferably 2.0 μm or greater, still more preferably 5.0 μm or greater. In view of particle stability, the average particle size is preferably 50.0 μm or less, more preferably 30.0 μm or less.

In the disclosure, the average particle size may be determined by dynamic light scattering (DLS). Alternatively, the average particle size may be calculated from an optical micrograph using particle size analyzing software LUZEX AP. In this case, preferably, multiple pictures are taken such that they include 50 or more particles in total for analysis.

The hollow fine particulate obtained by the production method of the disclosure has a monoporous structure including a shell containing a perfluororesin and a hollow portion.

The "monoporous structure" in the disclosure does not encompass structures having multiple pores, such as a multiporous structure, but refers to structures having a single, closed pore. In the following description, the portion other than the pore of the hollow fine particulate is referred to as a "shell".

The pore size of the hollow portion in the hollow fine particulate is preferably 66% or higher, more preferably 74% or higher, still more preferably 79% or higher, while it is preferably 95% or lower, more preferably 93% or lower, still more preferably 90% or lower, particularly preferably 88% or lower, of the diameter of the hollow fine particulate.

In the disclosure, the pore size of the hollow portion may be determined by an image analysis of a TEM micrograph of the hollow fine particulate using particle size analyzing software LUZEX AP. Specifically, the pore size of the

hollow portion can be calculated by randomly extracting about 200 hollow fine particles in the TEM micrograph, measuring the inner diameters (R1) of the particles, and calculating the pore size by the following formula:

$$\text{Pore size of hollow portion} = R1 \times 2.$$

The percentage of the thickness of the shell relative to the diameter of the hollow fine particulate is preferably 17% or lower, more preferably 13% or lower, still more preferably 10% or lower, particularly preferably 9% or lower. A small shell thickness can lead to a high porosity, resulting in a hollow fine particulate having a lower permittivity.
From the viewpoint of strength of the hollow fine particulate, the percentage is preferably 4% or higher, more preferably 6% or higher.
In the disclosure, the thickness of the shell may be determined by an image analysis of an optical micrograph or a TEM micrograph of the hollow fine particulate using particle size analyzing software LUZEX AP. Specifically, the thickness of the shell can be calculated by randomly extracting about 50 to 200 hollow fine particles in the optical micrograph or the TEM micrograph, measuring the inner diameters (R1) and the outer diameters (R2) of the particles, and calculating the thickness of the shell by the following formula:

$$\text{Thickness of shell} = R2 - R1.$$

The porosity of the hollow fine particulate is preferably 30% by volume or higher, more preferably 40% by volume or higher, still more preferably 50% by volume or higher, particularly preferably 55% by volume or higher. A hollow fine particulate having a high porosity can have a low relative permittivity and is suitable for the use as an electronic material. From the viewpoint of strength of the hollow fine particulate, the upper limit of the porosity is preferably, but is not limited to, 80% by volume or lower, more preferably 70% by volume or lower.
In the disclosure, the porosity is calculated by the following formula:

Porosity M (% by volume) = amount of non-polymerizable solvent (g)/(amount of perfluoromonomer (g) + amount of crosslinkable monomer (g) + amount of non-polymerizable solvent (g)) $\times$ 100.

The refractive index of the hollow fine particulate is preferably 1.40 or lower, more preferably 1.35 or lower, still more preferably 1.30 or lower, particularly preferably 1.25 or lower. The lower limit of the refractive index is not limited and may be 1.10 or higher, for example.
The refractive index herein is a value determined by the critical angle method.
When a phase separation promoter is used, the phase separation promoter is included in the shell of the hollow fine particulate. From the viewpoints of electric properties, the amount of the phase separation promoter in the hollow fine particulate is preferably small. Thus, in the production method of the disclosure, the amount of the phase separation promoter used is preferably as small as possible.
The amount of the phase separation promoter in the hollow fine particulate relative to the perfluororesin is preferably 5% by mass or less, more preferably 1% by mass or less, preferably 0.1% by mass or less. The lower limit is not limited and may be 0% by mass.
From the viewpoints of low dielectricity and low refractive index, the hollow portion of the hollow fine particulate is preferably a gas, more preferably the air.

(Hollow fine particulate)

The hollow fine particulate of the disclosure can be obtained by the production method of the disclosure. The suitable embodiments of the production method of the disclosure described above are also applicable to the hollow fine particulate of the disclosure.
The production method of the disclosure can provide a hollow fine particulate whose particulate shape is maintained even in an isolated state.
The hollow fine particulate of the disclosure contains a perfluororesin containing a polymerized unit based on a perfluoromonomer and contains substantially no non-polymerizable solvent. The hollow fine particulate has an average particle size of 1.0 μm or greater and has a monoporous structure.
The particle size of the hollow fine particulate of the disclosure can be adjusted by changing the sizes of the droplets in the production method of the disclosure. Conventional methods have difficulty in providing an increased average particle size for a hollow fine particulate containing a perfluororesin.
The production method of the disclosure described above allows a hollow fine particulate containing a

perfluororesin to have an increased average particle size, and thus can produce a hollow fine particulate having an average particle size of 1.0 μm or greater.

The hollow fine particulate of the disclosure contains substantially no non-polymerizable solvent. The expression "the hollow fine particulate contains substantially no non-polymerizable solvent" means that a non-polymerizable solvent content of the hollow fine particulate is 0.1% by mass or lower. The hollow fine particulate of the disclosure may be completely free of non-polymerizable solvent.

The hollow fine particulate of the disclosure has an average particle size of 1.0 μm or greater. The average particle size is preferably 2.0 μm or greater, more preferably 5.0 μm or greater. The average particle size is preferably 50.0 μm or less, more preferably 40.0 μm or less, still more preferably 30.0 μm or less.

The hollow fine particulate of the disclosure is hollow and has a monoporous structure, and thus has excellently low dielectricity and excellent high-frequency characteristics. Thus, the hollow fine particulate is suitable for use as an electronic material. In other words, the hollow fine particulate of the disclosure is preferably for use as an electronic material.

When a hollow fine particulate with a multiporous structure is used as an additive, the matrix resin may enter the pores, significantly reducing the degree of hollowness. In such a case, the aimed electric properties may not be achieved. Since the hollow fine particulate of the disclosure has a monoporous structure, such a situation is not likely to occur, and the electric properties are easily adjusted to the desired electric properties.

The hollow fine particulate of the disclosure contains the perfluororesin and has an average particle size of 1.0 μm or greater. Thus, the hollow fine particulate can have excellently low dielectricity and have a smaller surface area than others when they are used at the same volume. Thus, the hollow fine particulate is suitable as an electronic material. A smaller average particle size leads to a larger specific surface area, which may significantly lower the electric properties due to moisture attached to the interface, for example.

(Phase-separated fine particulate)

An aqueous dispersion containing the phase-separated fine particulate of the disclosure (aqueous dispersion of the disclosure) can be obtained by performing the step A and the step B in the production method of the disclosure. The phase-separated fine particulate of the disclosure may be used directly as an aqueous dispersion or may be filtered, optionally washed with water, and then used in the form of powder. The suitable embodiments of the production method of the disclosure described above are also applicable to the phase-separated fine particulate of the disclosure.

The phase-separated fine particulate of the disclosure contains a perfluororesin containing a polymerized unit based on a perfluoromonomer; and a non-polymerizable solvent. The phase-separated fine particulate has an average particle size of 1.0 μm or greater and has a monoporous structure.

The phase-separated fine particulate of the disclosure is different from the hollow fine particulate of the disclosure in that the hollow portion includes a non-polymerizable solvent. The amount of the non-polymerizable solvent relative to the phase-separated fine particulate is preferably 10% by mass or more, more preferably 30% by mass or more. The non-polymerizable solvent content relative to the phase-separated fine particulate content is preferably 70% by mass or less, more preferably 60% by mass or less.

The phase-separated fine particulate of the disclosure has an average particle size of 1.0 μm or greater. The average particle size is preferably 2.0 μm or greater, more preferably 5.0 μm or greater. The average particle size is preferably 50.0 μm or less, more preferably 40.0 μm or less, still more preferably 30.0 μm or less.

Like the hollow fine particulate of the disclosure, the phase-separated fine particulate of the disclosure is suitable for use in an electronic material. In other words, the phase-separated fine particulate of the disclosure is preferably used for an electronic material.

(Composition)

A first composition of the disclosure contains the hollow fine particulate of the disclosure and a perfluororesin containing a polymerized unit based on a perfluoromonomer.

The first composition of the disclosure may be a composition which is intentionally produced by mixing the hollow fine particulate and an insulating resin or a composition generated during the production of the hollow fine particulate.

The first composition of the disclosure preferably has the hollow fine particulate dispersed in the insulating resin.

The insulating resin in the first composition of the disclosure is separately added from the perfluororesin contained in the hollow fine particulate. Non-limiting examples of the insulating resin include fluorine-containing resin, epoxy resin, thermosetting modified polyphenylene ether resin, thermosetting polyimide resin, silicon resin, benzoxazine resin, melamine resin, urea resin, allyl resin, phenolic resin, unsaturated polyester resin, polyurethane resin, and aniline resin. Preferred among these are fluorine-containing resin, epoxy resin, thermosetting polyimide resin, modified polyphenylene ether resin, thermosetting polyimide resin, silicon resin, benzoxazine resin, and melamine resin. Each of these

insulating resins may be used alone or two or more of these may be used in combination. The insulating resin may be of the same type as the perfluororesin contained in the hollow fine particulate.

In the first composition of the disclosure, the composition ratio of the insulating resin to the hollow fine particulate is not limited. For example, the composition ratio by mass (insulating resin/hollow fine particulate) in the composition is any ratio between 5/95 to 95/5.

The amount of the hollow fine particulate in the first composition of the disclosure is not limited and may be appropriately set in accordance with the properties required for the applications. For example, the amount may be 10 to 90 parts by mass per 100 parts by mass of the insulating resin.

The first composition of the disclosure is preferable in that the electric properties are controllable.

A second composition of the disclosure contains the phase-separated fine particulate of the disclosure and an insulating resin.

The second composition of the disclosure may be a composition which is intentionally produced by mixing the phase-separated fine particulate and an insulating resin or a composition generated during the production of the phase-separated fine particulate.

The second composition of the disclosure preferably has the phase-separated fine particulate dispersed in the insulating resin.

The insulating resin in the second composition of the disclosure is separately added from the perfluororesin contained in the phase-separated fine particulate. The insulating resin described for the first composition of the disclosure can be used.

In the second composition of the disclosure, the composition ratio of the insulating resin to the phase-separated fine particulate is not limited. For example, the composition ratio by mass (insulating resin/phase-separated fine particulate) in the composition is any ratio between 5/95 to 95/5.

The amount of the phase-separated fine particulate in the second composition of the disclosure is not limited and may be appropriately set in accordance with the properties required for the applications. For example, the amount may be 10 to 90 parts by mass per 100 parts by mass of the insulating resin.

Like the first composition of the disclosure, the second composition of the disclosure is preferable in that the electric properties are controllable.

The electronic material in which any of the hollow fine particulate, the phase-separated fine particulate, the first composition, and the second composition of the disclosure is used is not limited. Examples thereof include printed circuit boards, antenna substrates, and interlayer insulating films for high-frequency connectors. In particular, the hollow fine particulate, the phase-separated fine particulate, the first composition, and the second composition of the disclosure are useful for high frequency compatible substrates used in 5G and 6G.

## EXAMPLES

The disclosure is described in more detail below with reference to examples, but is not limited to these examples.

The numerical values in the examples were measured by the following methods.

(Average particle size)

The particle size was calculated by image analysis of an optical micrograph of the fine particles using particle size analyzing software LUZEX AP. Specifically, pictures of different positions were taken such that they included 50 or more particles in total. Then, the average particle size was calculated. The average particle size of the phase-separated fine particulate is equal to that of the hollow fine particulate.

(Porosity)

The porosity was calculated by the following formula:

Porosity M (% by volume) = amount of non-polymerizable solvent (g)/(total amount of monomer(s) (g) + amount of non-polymerizable solvent (g)) $\times$ 100.

The porosity M of the phase-separated fine particulate is equal to that of the hollow fine particulate.

(Glass transition temperature)

A differential scanning calorimeter (DSC) (DSC7000 available from Hitachi High-Tech Corp.) was used to

increase the temperature (first run), decrease the temperature, and increase the temperature (second run) within a temperature range from 30°C to 200°C at 10°C/min so that an endothermic curve was obtained, and the intermediate point of the endothermic curve was determined as the glass transition temperature (°C).

(Degree of polymerization)

After polymerization, drying was performed at a temperature of 100°C for 24 hours. The solid concentration ratio Z was calculated from the residue. The degree of polymerization C (%) was calculated from the ratio of charged monomers (ratio Q of the total amount of the monomers relative to the total weight) using the following formula:

$$\text{Degree of polymerization C (\%)} = Z/Q \times 100\ (\%).$$

(Example 1)

Perfluoro(2-methylene-4-methyl-1,3-dioxolane) (monomer a7, a monomer represented by the formula (a-7)) was used as a perfluoromonomer corresponding to a monofunctional monomer; 1,1,2,2,3,3-hexafluoro-1,3-bis[(1,2,2-trifluorovinyl)oxy]propane (PFDVE) ($CF_2$=CF-O-$(CF_2)_3$-O-CF=$CF_2$) was used as a perfluoromonomer corresponding to a multifunctional monomer; 2,2-3,3-4,4-5,5-6,6-7,7-dodecafluoro-1-heptanol ($H(CF_2)_6CH_2OH$) which is a fluorine-containing alcohol was used as a non-polymerizable solvent; a homopolymer of $CF_2$=$CFCF_2CF_2SO_3H$ having a Mw of 10000 which is a fluorine-containing particulate dispersion stabilizer, and polyvinyl alcohol (PVA) having a Pn of 1700 and a degree of saponification of 88% which is a polymer dispersion stabilizer were used as the particulate dispersion stabilizers; and 2,2-azobis(methyl isobutyrate) (the following compound) (initiator (1)) which is an azo compound having an ester group at the terminal was used as a polymerization initiator.

[Chem. 18]

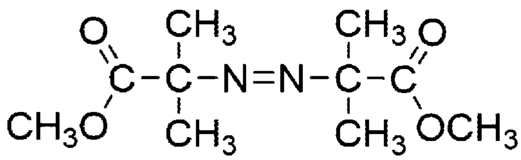

According to the composition shown in Table 2, a crosslinkable monomer and a perfluoromonomer in a mass ratio of 3:2 were added to a non-polymerizable solvent. Further, a polymerization initiator was dissolved to prepare a homogenous oil phase (solution), and the oil phase was dispersed using a homogenizer in an aqueous medium in which a particulate dispersion stabilizer and a pH adjuster were dissolved to predetermined concentrations in advance to prepare a dispersion containing suspension droplets. The dispersion was stirred in a nitrogen atmosphere at 70°C and 180 rpm for 24 hours to perform polymerization. Thus, suspended particles dispersed in water were produced.
FIG. 1 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 6.05 μm.
The phase-separated fine particulate had a porosity M of 50% by volume.

(Example 2)

The phase-separated fine particulate obtained in Example 1 was subjected to freeze drying in which the particulate was frozen at -50°C and then dried at room temperature at 18 Pa for 24 hours, followed by observation by SEM. FIG. 2 and FIG. 3 show the result. The production of a hollow fine particulate having a monoporous structure was confirmed.
The glass transition temperature of the perfluororesin in the obtained hollow fine particulate was 130°C.

(Example 3)

Suspended particles dispersed in water were produced as in Example 1, except that the amount of the polymerization initiator was reduced by half.
FIG. 4 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 2.85 μm.
The phase-separated fine particulate had a porosity M of 50% by volume.

(Example 4)

The phase-separated fine particulate obtained in Example 3 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 130°C.

(Example 5)

Suspended particles dispersed in water were produced as in Example 1, except that the amount of the polymerization initiator was reduced to 1/5.
The optical micrograph (not shown) after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 1.60 μm.
The phase-separated fine particulate had a porosity M of 50% by volume.

(Example 6)

The phase-separated fine particulate obtained in Example 5 was freeze-dried under the conditions in Example 2, and then observed by SEM. FIG. 5 shows the result. The production of a hollow fine particulate having a monoporous structure was confirmed.
The glass transition temperature of the perfluororesin in the obtained hollow fine particulate was 130°C.

(Comparative Examples 1 to 3)

A perfluoromonomer and a non-polymerizable solvent were mixed according to the composition shown in Table 2. The perfluoromonomer did not dissolve and could not be polymerized.

(Comparative Example 4)

Suspended particles dispersed in water were produced as in Example 1, except that the composition was changed to the one shown in Table 2, and observed by optical microscope. The obtained particulate was not hollow and had a structure reversed from that of Example 1, with a polymer inside and an oil phase outside (not shown).

(Comparative Example 5)

Suspended particles dispersed in water were produced as in Example 1, except that the composition was changed to the one shown in Table 2, and observed by SEM after freeze drying under the conditions in Example 2. FIG. 6 shows the result. The obtained particulate was a multiporous body.

(Comparative Example 6)

Comparative Example 6 was carried out as in Example 1, except that the composition was changed to the one shown in Table 2, but the polymerization reaction did not proceed. This was presumably caused by non-dissolution of the polymerization initiator.

(Comparative Example 7)

Suspended particles dispersed in water were produced as in Example 1, except that the composition was changed to the one shown in Table 2, and observed by SEM after freeze drying under the conditions in Example 2. FIG. 7 shows the result. The obtained particulate was an aggregate of many solid fine particles (a type of multiporous body).

(Comparative Example 8)

Suspended particles dispersed in water were produced as in Example 1, except that the composition was changed to the one shown in Table 2, and observed by SEM after freeze drying under the conditions in Example 2. FIG. 8 shows the result. The obtained particulate was a multiporous body.

(Comparative Example 9)

Suspended particles dispersed in water were produced as in Example 1, except that the composition was changed to the one shown in Table 2, and observed by optical microscope. FIG. 9 shows the result. The obtained particulate was an aggregate of many solid fine particles (a type of multiporous body).

(Comparative Example 10)

Suspended particles dispersed in water were produced as in Example 1, except that the composition was changed to the one shown in Table 2, and observed by optical microscope. FIG. 10 shows the result. The obtained particulate was not hollow and had a structure reversed from that of Example 1, with a polymer inside and an oil phase outside.

(Comparative Example 11)

Suspended particles dispersed in water were produced as in Example 1, except that the composition was changed to the one shown in Table 2, and observed by optical microscope. FIG. 11 shows the result. The obtained particulate was a multiporous body.

(Comparative Example 12)

Suspended particles dispersed in water were produced as in Example 1, except that the composition was changed to the one shown in Table 2, and observed by optical microscope. FIG. 12 shows the result. The obtained particulate was not hollow and had a structure reversed from that of Example 1, with a polymer inside and an oil phase outside.

(Example 7)

Suspended particles dispersed in water were produced as in Example 1, except that $CF_2$=CF-$(CF_2)_2$-O-CF=$CF_2$ was used as the multifunctional monomer.
FIG. 13 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 18.7 μm.
The phase-separated fine particulate had a porosity M of 50% by volume.

(Example 8)

The phase-separated fine particulate obtained in Example 7 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 110°C.

(Example 9)

Suspended particles dispersed in water were produced as in Example 1, except that the mass ratio of the polymerized unit based on a monofunctional monomer to the polymerized unit based on a multifunctional monomer in Example 1 was changed to 70/30 (0.21 g/0.09 g) and that the mixing ratio of the monomers with the non-polymerizable solvent was set to 60/40 (total amount of monomers/non-polymerizable solvent = 0.3 g/0.2 g).
FIG. 14 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 21.1 μm.
The phase-separated fine particulate had a porosity M of 40% by volume.

(Example 10)

The phase-separated fine particulate obtained in Example 9 was freeze-dried under the conditions in Example 2, and then observed by SEM. The production of a hollow fine particulate having a monoporous structure was confirmed.
The glass transition temperature of the perfluororesin in the obtained hollow fine particulate was 130°C.

(Example 11)

Suspended particles dispersed in water were produced as in Example 1, except that $CF_2=CF-(CF_2)_2-O-CF=CF_2$ was used as a multifunctional monomer and that the mass ratio of the polymerized unit based on a monofunctional monomer to the polymerized unit based on a multifunctional monomer in Example 1 was changed to 30/70 (0.075 g/0.175 g).
FIG. 15 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 11.4 μm.
The phase-separated fine particulate had a porosity M of 50% by volume.

(Example 12)

The phase-separated fine particulate obtained in Example 11 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 109°C.

(Example 13)

Suspended particles dispersed in water were produced as in Example 1, except that $F(CF_2)_3CH_2OH$ having an SP value of 9.36 was used as the non-polymerizable solvent in Example 1.
FIG. 16 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 29.2 μm.
The phase-separated fine particulate had a porosity M of 50% by volume.

(Example 14)

The phase-separated fine particulate obtained in Example 13 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 109°C.

(Example 15)

Suspended particles dispersed in water were produced as in Example 1, except that $F(CF_2)_4CH_2OH$ having an SP value of 9.01 was used as the non-polymerizable solvent in Example 1.
FIG. 17 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 24.8 μm.
The phase-separated fine particulate had a porosity M of 50% by volume.

(Example 16)

The phase-separated fine particulate obtained in Example 15 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 130°C.

(Example 17)

Suspended particles dispersed in water were produced as in Example 1, except that a homopolymer of $CF_2$=CF-$OCF_2CF_2COOH$ having a Mw of 8000 was used as the fluorine-containing particulate dispersion stabilizer of the particulate dispersion stabilizers in Example 1.
FIG. 18 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 12.8 μm.
The phase-separated fine particulate had a porosity M of 50% by volume.

(Example 18)

The phase-separated fine particulate obtained in Example 17 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 130°C.

(Example 19)

Suspended particles dispersed in water were produced as in Example 1, except that polyvinylpyrrolidone having a Mw of 40000 was used as the polymer dispersion stabilizer of the particulate dispersion stabilizers in Example 1.
FIG. 19 shows an optical micrograph of suspended particles dispersed in water after polymerization. The optical micrograph after polymerization indicated that particles with a hollow structure (single pore) were obtained.
The obtained suspended particles dispersed in water were a phase-separated fine particulate including the non-polymerizable solvent in its inside.
The average particle size calculated from the optical micrograph was 14.4 μm.
The phase-separated fine particulate had a porosity M of 50% by volume.

(Example 20)

The phase-separated fine particulate obtained in Example 19 was freeze-dried under the conditions in Example 2, and then observed by SEM. The production of a hollow fine particulate having a monoporous structure was confirmed (not shown).
The glass transition temperature of the perfluororesin in the obtained hollow fine particulate was 130°C.

(Example 21)

The emulsion of the hollow fine particulate obtained in Example 1 was blended with an aqueous paint Zeffle

SE-405 available from Daikin Industries, Ltd. in an aqueous system, whereby a paint in which the hollow fine particulate was mixed at 10% by mass based on the solid content was obtained. Next, the paint was applied to a glass slide by bar-coating, and dried at 40°C for two hours, at 70°C for three hours, and then at 150°C for three hours, whereby a coating was obtained. The resulting coating had a uniform appearance and a specific gravity of 1.43. The specific gravity was measured at 24°C using a specific gravity meter available from Shimadzu Corporation.

The coating produced in the same manner using the aqueous paint Zeffle SE-405 alone had a specific gravity of 1.50. Assuming that the fine particulate of Example 1 did not have a hollow structure, the specific gravity of the coating was 1.54. From these specific gravity measurement results, it was confirmed that the hollow structure of the fine particulate was maintained in the coating obtained in Example 21.

[Table 2]

| Composition (g) | | Example 1 | Example 3 | Example 5 | Example 7 | Example 9 | Example 11 | Example 13 | Example 15 | Example 17 | Example 19 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|---|---|---|---|---|---|---|---|---|
| Perfluoromonomer | Monomer a7 | 0.15 | 0.15 | 0.15 | 0.15 | 0.21 | 0.075 | 0.15 | 0.15 | 0.15 | 0.15 | 0.15 | 0.15 | 0.15 | 0.20 | 0.20 | 0.15 | 0.15 | 0.60 | 0.15 | 0.15 | 0.15 | 0.15 |
| | PFDVE | 0.10 | 0.10 | 0.10 | – | 0.09 | – | 0.10 | 0.10 | 0.10 | 0.10 | 0.10 | 0.10 | 0.10 | – | – | 0.10 | 0.10 | – | 0.10 | 0.10 | 0.10 | 0.10 |
| | CF2=CFCF2CF2OCF=CF2 | – | – | – | 0.10 | – | 0.175 | – | – | – | – | – | – | – | – | – | – | – | – | – | – | – | – |
| Non-polymerizable solvent | H(CF2)6CH2OH SP value: 9.40 | 0.25 | 0.25 | 0.25 | 0.25 | 0.20 | 0.25 | – | – | 0.25 | 0.25 | – | – | – | – | – | – | – | – | – | – | – | – |
| | F(CF2)3CH2OH SP value: 9.36 | – | – | – | – | – | – | 0.25 | – | – | – | – | – | – | – | – | – | – | – | – | – | – | – |
| | F(CF2)4CH2OH SP value: 9.01 | – | – | – | – | – | – | – | 0.25 | – | – | – | – | – | – | – | – | – | – | – | – | – | – |
| | F(CF2)6(CH2)2OH SP value: 8.52 | – | – | – | – | – | – | – | – | – | – | – | – | – | – | – | 0.25 | 0.25 | – | – | – | – | – |
| | n-Hexane SP value: 7.30 | – | – | – | – | – | – | – | – | – | – | – | 0.25 | – | – | – | – | – | – | – | – | – | – |
| | Acetone SP value: 9.90 | – | – | – | – | – | – | – | – | – | – | – | – | 0.25 | – | – | – | – | – | – | – | – | – |
| | DMF SP value: 12 | – | – | – | – | – | – | – | – | – | – | 0.25 | – | – | – | – | – | – | – | – | – | – | – |
| | HFCP SP value: 7.31 | – | – | – | – | – | – | – | – | – | – | – | – | – | 0.20 | 0.20 | – | – | 0.60 | – | – | – | – |
| | F(CF2)2CH2OH SP value: 9.849 | – | – | – | – | – | – | – | – | – | – | – | – | – | – | – | – | – | – | 0.25 | – | – | – |
| | H(CF2)2CH2OH SP value: 11.593 | – | – | – | – | – | – | – | – | – | – | – | – | – | – | – | – | – | – | – | 0.25 | – | – |
| | H(CF2)4CH2OH SP value: 10.174 | – | – | – | – | – | – | – | – | – | – | – | – | – | – | – | – | – | – | – | – | 0.25 | – |
| | H(CF3)2COH SP value: 8.971 | – | – | – | – | – | – | – | – | – | – | – | – | – | – | – | – | – | – | – | – | – | 0.25 |
| Particulate dispersion stabilizer | Homopolymer of CF2=CFCF2CF2SO3H | 0.0125 | 0.0125 | 0.0125 | 0.0125 | 0.0125 | 0.0125 | 0.0125 | 0.0125 | – | 0.0125 | – | – | – | – | 0.017 | 0.0125 | 0.0125 | – | 0.0125 | 0.0125 | 0.0125 | 0.0125 |
| | Homopolymer of CF2=CF-OCF2CF2COOH | – | – | – | – | – | – | – | – | 0.0125 | – | – | – | – | – | – | – | – | – | – | – | – | – |
| | PVA | 0.0375 | 0.0375 | 0.0375 | 0.0375 | 0.0375 | 0.0375 | 0.0375 | 0.0375 | 0.0375 | – | – | – | – | 0.017 | – | 0.0375 | 0.0375 | 0.05 | 0.0375 | 0.0375 | 0.0375 | 0.0375 |
| | Polyvinylpyrrolidone | – | – | – | – | – | – | – | – | – | 0.0375 | – | – | – | – | – | – | – | – | – | – | – | – |
| | Homopolymer of CH2=CFCF2OCF(CF3)COOH | – | – | – | – | – | – | – | – | – | – | – | – | – | – | – | – | – | 0.2 | – | – | – | – |
| Polymerization initiator | Initiatotr (1) | 0.025 | 0.0125 | 0.0025 | 0.025 | 0.025 | 0.025 | 0.025 | 0.025 | 0.025 | 0.025 | – | – | – | – | – | – | 0.025 | – | 0.025 | 0.025 | 0.025 | 0.025 |
| | BPO | – | – | – | – | – | – | – | – | – | – | – | – | – | 0.004 | 0.004 | 0.025 | – | 0.024 | – | – | – | – |
| | AIBN | – | – | – | – | – | – | – | – | – | – | – | – | – | – | – | – | – | – | – | – | – | – |
| pH adjuster | NH3 | 0.04 | 0.04 | 0.04 | 0.04 | 0.04 | 0.04 | 0.04 | 0.04 | 0.043 | 0.04 | – | – | – | – | 0.027 | 0.04 | 0.04 | 0.03 | 0.04 | 0.04 | 0.04 | 0.04 |
| Dispersion medium | Water | 5 | 5 | 5 | 5 | 5 | 5 | 5 | 5 | 5 | 5 | – | – | – | 1.667 | 1.667 | 5 | 5 | 5 | 5 | 5 | 5 | 5 |

PFDVE: $CF_2=CF-O-(CF_2)_3-O-CF=CF_2$

DMF: dimethylformamide
HFCP: 1,1,2,2,3,3,4-heptafluorocyclopentane
PVA: polyvinyl alcohol
BPO: benzoyl peroxide
AIBN: azobisisobutyronitrile

## Claims

1. A method for producing a hollow fine particulate comprising:

   a step A of dispersing a solution containing a perfluoromonomer and a non-polymerizable solvent capable of dissolving the perfluoromonomer and having an SP value of 9.00 to 9.80 $(cal/cm^3)^{1/2}$ into water to provide a dispersion;
   a step B of polymerizing the perfluoromonomer to provide a phase-separated fine particulate containing a perfluororesin and having a monoporous structure; and
   a step C of removing the non-polymerizable solvent in the phase-separated fine particulate to provide a hollow fine particulate having a monoporous structure.

2. The method for producing a hollow fine particulate according to claim 1,
wherein in the step A, the dispersion contains an initiator containing an ester group at a terminal.

3. The method for producing a hollow fine particulate according to claim 2,
wherein the ester group is represented by -COOR where R is an unbranched alkyl group.

4. The method for producing a hollow fine particulate according to any one of claims 1 to 3,
wherein in the step (A), the dispersion contains a particulate dispersion stabilizer, and the particulate dispersion stabilizer contains at least one fluorine-containing particulate dispersion stabilizer selected from the group consisting of a fluoropolymer ($\alpha$) of a monomer ($\alpha$) represented by the following general formula ($\alpha$) and an anionic fluorine-containing surfactant represented by the following general formula (1):

   general formula ($\alpha$):

   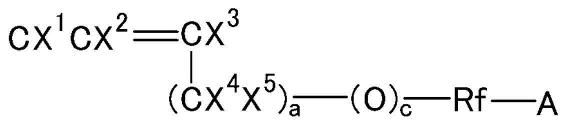

   wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is -COOM, $-SO_3M$, $-OSO_3M$, or $-C(CF_3)_2OM$ (wherein M is H, a metal atom, $NR^7_4$, an optionally substituted imidazolium, an optionally substituted pyridinium, or an optionally substituted phosphonium; and $R^7$ is H or an organic group); and

   general formula (1): $Rf\S(X^-)_j(M^+)_j$

   wherein Rf§ is a C1-C30 (per)fluoroalkyl chain or a (per) fluoro (poly) oxyalkylene chain; $X^-$ is $-COO^-$, $-PO_3^-$, or $-SO_3^-$; $M^+$ is selected from $H^+$, $NH_4^+$, and an alkali metal ion; and j is optionally 1 or 2.

5. The method for producing a hollow fine particulate according to claim 4,
wherein the particulate dispersion stabilizer further contains at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer.

6. The method for producing a hollow fine particulate according to any one of claims 1 to 3,
wherein in the step A, the dispersion contains a particulate dispersion stabilizer, and the particulate dispersion

stabilizer includes at least one selected from the group consisting of a homopolymer of $CF_2=CFCF_2CF_2SO_3H$, a homopolymer of $CF_2=CF-OCF_2CF_2COOH$, polyvinyl alcohol, and polyvinylpyrrolidone.

**7.** The method for producing a hollow fine particulate according to any one of claims 1 to 6, wherein the perfluoromonomer is a perfluoroolefin.

**8.** The method for producing a hollow fine particulate according to claim 7, wherein the perfluoroolefin contains at least one of a monofunctional monomer containing one polymerizable reactive group or a multifunctional monomer containing two or more polymerizable reactive groups.

**9.** The method for producing a hollow fine particulate according to claim 8, wherein the perfluoroolefin contains the monofunctional monomer and the multifunctional monomer, and the perfluororesin has a mass ratio of a polymerized unit based on the monofunctional monomer to a polymerized unit based on the multifunctional monomer (polymerized unit based on the monofunctional monomer/polymerized unit based on the multifunctional monomer) of 75/25 to 25/75.

**10.** The method for producing a hollow fine particulate according to claim 8 or 9, wherein the monofunctional monomer is a cyclic perfluoroolefin, and the multifunctional monomer is a monomer represented by the following formula (b):

$$CF_2=CF-Q^1-CF=CF_2 \qquad (b)$$

wherein $Q^1$ is a C1-C5 linear or optionally branched perfluoroalkylene group optionally containing an ether bond.

**11.** The method for producing a hollow fine particulate according to claim 10, wherein the cyclic perfluoroolefin is a monomer represented by the following formula (a) or (c):

[Chem. 1]

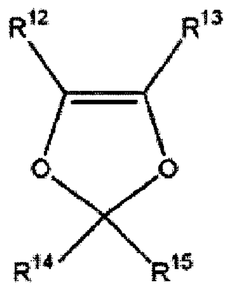

(a)

wherein $R^{12}$ to $R^{15}$ are each independently a fluorine atom, a C1-C5 perfluoroalkyl group, or a C1-C5 perfluoroalkoxy group; or

[Chem. 2]

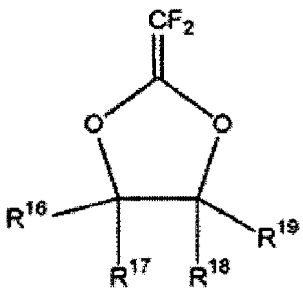

(c)

wherein $R^{16}$ to $R^{19}$ are each independently a fluorine atom, a C1-C5 perfluoroalkyl group, or a C1-C5 perfluoroalkoxy group.

**12.** The method for producing a hollow fine particulate according to claim 11, wherein the perfluoroolefin is a monomer represented by the formula (c).

**13.** The method for producing a hollow fine particulate according to claim 9,

wherein the monofunctional monomer is perfluoro(2-methylene-4-methyl-1,3-dioxolane), the multifunctional monomer includes at least one selected from the group consisting of $CF_2=CF-O-(CF_2)_3-O-CF=CF_2$ and $CF_2=CFCF_2CF_2OCF=CF_2$, and the perfluororesin has a mass ratio of the polymerized unit based on the monofunctional monomer to the polymerized unit based on the multifunctional monomer (polymerized unit based on the monofunctional monomer/polymerized unit based on the multifunctional monomer) of 70/30 to 30/70.

**14.** The method for producing a hollow fine particulate according to any one of claims 1 to 13, wherein in the step B, the perfluororesin has a glass transition temperature of 60°C or higher.

**15.** The method for producing a hollow fine particulate according to claim 14, wherein in the step B, the glass transition temperature of the perfluororesin is 120°C or higher.

**16.** The method for producing a hollow fine particulate according to any one of claims 1 to 15, wherein the non-polymerizable solvent is a fluorine-containing non-polymerizable solvent.

**17.** The method for producing a hollow fine particulate according to claim 16, wherein the fluorine-containing non-polymerizable solvent is a fluorine-containing alcohol.

**18.** The method for producing a hollow fine particulate according to claim 17, wherein the fluorine-containing alcohol has a carbon number of 2 to 7.

**19.** The method for producing a hollow fine particulate according to claim 17 or 18, wherein the fluorine-containing alcohol has a hydrogen atom at an ω-position.

**20.** The method for producing a hollow fine particulate according to any one of claims 1 to 15, wherein the non-polymerizable solvent includes at least one selected from the group consisting of $H(CF_2)_6CH_2OH$, $F(CF_2)_3CH_2OH$, and $F(CF_2)_4CH_2OH$.

**21.** The method for producing a hollow fine particulate according to any one of claims 1 to 20, wherein the hollow fine particulate has an average particle size of 1.0 μm or greater.

**22.** The method for producing a hollow fine particulate according to any one of claims 1 to 21, wherein the hollow fine particulate has a porosity of 30% by volume or higher.

**23.** The method for producing a hollow fine particulate according to claim 22, wherein the porosity of the hollow fine particulate is 40% by volume or higher.

**24.** A hollow fine particulate comprising:

a perfluororesin containing a polymerized unit based on a perfluoromonomer, the hollow fine particulate containing substantially no non-polymerizable solvent, the hollow fine particulate having an average particle size of 1.0 μm or greater, the hollow fine particulate having a monoporous structure.

**25.** The hollow fine particulate according to claim 24, wherein the perfluoromonomer is a perfluoroolefin.

**26.** The hollow fine particulate according to claim 25, wherein the perfluoroolefin contains at least one of a monofunctional monomer containing one polymerizable reactive group or a multifunctional monomer containing two or more polymerizable reactive groups.

**27.** The hollow fine particulate according to claim 26, wherein the perfluoroolefin contains the monofunctional monomer and the multifunctional monomer, and the perfluororesin has a mass ratio of a polymerized unit based on the monofunctional monomer to a polymerized unit based on the multifunctional monomer (polymerized unit based on the monofunctional monomer/polymerized unit

based on the multifunctional monomer) of 75/25 to 25/75.

**28.** The hollow fine particulate according to claim 26 or 27, wherein the monofunctional monomer is a cyclic perfluoroolefin, and the multifunctional monomer is a monomer represented by the following formula (b):

$$CF_2=CF-Q^1-CF=CF_2 \qquad (b)$$

wherein $Q^1$ is a C1-C5 linear or optionally branched perfluoroalkylene group optionally containing an ether bond.

**29.** The hollow fine particulate according to claim 28, wherein the cyclic perfluoroolefin is a monomer represented by the following formula (a) or (c):

[Chem. 3]

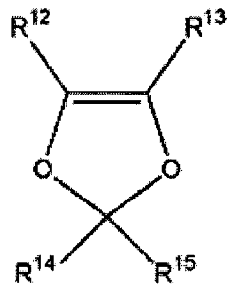

(a)

wherein $R^{12}$ to $R^{15}$ are each independently a fluorine atom, a C1-C5 perfluoroalkyl group, or a C1-C5 perfluoroalkoxy group; or

[Chem. 4]

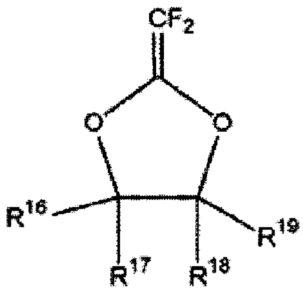

(c)

wherein $R^{16}$ to $R^{19}$ are each independently a fluorine atom, a C1-C5 perfluoroalkyl group, or a C1-C5 perfluoroalkoxy group.

**30.** The hollow fine particulate according to claim 29, wherein the perfluoroolefin is a monomer represented by the formula (c).

**31.** The hollow fine particulate according to claim 27,

wherein the monofunctional monomer is perfluoro(2-methylene-4-methyl-1,3-dioxolane), the multifunctional monomer includes at least one selected from the group consisting of $CF_2=CF-O-(CF_2)_3-O-CF=CF_2$ and $CF_2=CFCF_2CF_2OCF=CF_2$, and the perfluororesin has a mass ratio of the polymerized unit based on the monofunctional monomer to the polymerized unit based on the multifunctional monomer (polymerized unit based on the monofunctional monomer/polymerized unit based on the multifunctional monomer) of 70/30 to 30/70.

**32.** The hollow fine particulate according to any one of claims 24 to 31, wherein the perfluororesin has a glass transition temperature of 60°C or higher.

**33.** The hollow fine particulate according to claim 32,

wherein the glass transition temperature of the perfluororesin is 120°C or higher.

**34.** The hollow fine particulate according to any one of claims 24 to 33,
wherein the hollow fine particulate has a porosity of 30% by volume or higher.

**35.** The hollow fine particulate according to claim 34,
wherein the porosity of the hollow fine particulate is 40% by volume or higher.

**36.** The hollow fine particulate according to any one of claims 24 to 35,
wherein the perfluororesin contains a particulate dispersion stabilizer, and the particulate dispersion stabilizer contains at least one fluorine-containing particulate dispersion stabilizer selected from the group consisting of a fluoropolymer (α) of a monomer (α) represented by the following general formula (α) and an anionic fluorine-containing surfactant represented by the following general formula (1):

general formula (α):

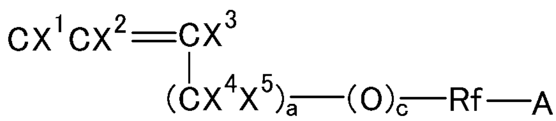

wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is $-COOM$, $-SO_3M$, $-OSO_3M$, or $-C(CF_3)_2OM$ (wherein M is H, a metal atom, $NR^7{}_4$, an optionally substituted imidazolium, an optionally substituted pyridinium, or an optionally substituted phosphonium; and $R^7$ is H or an organic group); and

general formula (1): $Rf§(X^-)_j(M^+)_j$

wherein Rf§ is a C1-C30 (per)fluoroalkyl chain or a (per) fluoro (poly) oxyalkylene chain; $X^-$ is $-COO^-$, $-PO_3^-$, or $-SO_3^-$; $M^+$ is selected from $H^+$, $NH_4^+$, and an alkali metal ion; and j is optionally 1 or 2.

**37.** The hollow fine particulate according to claim 36,
wherein the particulate dispersion stabilizer further contains at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer.

**38.** The hollow fine particulate according to any one of claims 24 to 35,
wherein the perfluororesin contains a particulate dispersion stabilizer, and the particulate dispersion stabilizer includes at least one selected from the group consisting of a homopolymer of $CF_2=CFCF_2CF_2SO_3H$, a homopolymer of $CF_2=CF-OCF_2CF_2COOH$, polyvinyl alcohol, and polyvinylpyrrolidone.

**39.** The hollow fine particulate according to any one of claims 24 to 38,
wherein the non-polymerizable solvent includes at least one selected from the group consisting of $H(CF_2)_6CH_2OH$, $F(CF_2)_3CH_2OH$, and $F(CF_2)_4CH_2OH$.

**40.** The hollow fine particulate according to any one of claims 24 to 39, which is used for an electronic material.

**41.** A phase-separated fine particulate comprising:

a perfluororesin containing a polymerized unit based on a perfluoromonomer; and
a non-polymerizable solvent, the phase-separated fine particulate having an average particle size of 1.0 μm or greater, the phase-separated fine particulate having a monoporous structure.

**42.** The phase-separated fine particulate according to claim 41,
wherein the perfluoromonomer is a perfluoroolefin.

**43.** The phase-separated fine particulate according to claim 42, wherein the perfluoroolefin contains at least one of a monofunctional monomer containing one polymerizable reactive group or a multifunctional monomer containing two or more polymerizable reactive groups.

**44.** The phase-separated fine particulate according to claim 43, wherein the perfluoroolefin contains the monofunctional monomer and the multifunctional monomer, and the perfluororesin has a mass ratio of a polymerized unit based on the monofunctional monomer to a polymerized unit based on the multifunctional monomer (polymerized unit based on the monofunctional monomer/polymerized unit based on the multifunctional monomer) of 75/25 to 25/75.

**45.** The phase-separated fine particulate according to claim 43 or 44, wherein the monofunctional monomer is a cyclic perfluoroolefin, and the multifunctional monomer is a monomer represented by the following formula (b):

$$CF_2=CF-Q^1-CF=CF_2 \qquad (b)$$

wherein $Q^1$ is a C1-C5 linear or optionally branched perfluoroalkylene group optionally containing an ether bond.

**46.** The phase-separated fine particulate according to claim 45, wherein the cyclic perfluoroolefin is a monomer represented by the following formula (a) or (c):

[Chem. 5]

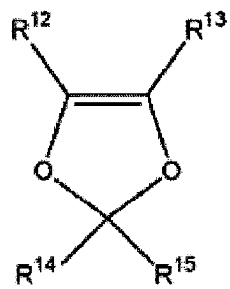

(a)

wherein $R^{12}$ to $R^{15}$ are each independently a fluorine atom, a C1-C5 perfluoroalkyl group, or a C1-C5 perfluoroalkoxy group; or

[Chem. 6]

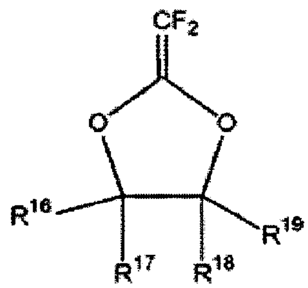

(c)

wherein $R^{16}$ to $R^{19}$ are each independently a fluorine atom, a C1-C5 perfluoroalkyl group, or a C1-C5 perfluoroalkoxy group.

**47.** The phase-separated fine particulate according to claim 46, wherein the perfluoroolefin is a monomer represented by the formula (c).

**48.** The phase-separated fine particulate according to claim 44,

wherein the monofunctional monomer is perfluoro(2-methylene-4-methyl-1,3-dioxolane), the multifunctional monomer includes at least one selected from the group consisting of $CF_2=CF-O-(CF_2)_3-O-CF=CF_2$ and $CF_2=CFCF_2CF_2OCF=CF_2$, and the perfluororesin has a mass ratio of the polymerized unit based on

the monofunctional monomer to the polymerized unit based on the multifunctional monomer (polymerized unit based on the monofunctional monomer/polymerized unit based on the multifunctional monomer) of 70/30 to 30/70.

**49.** The phase-separated fine particulate according to any one of claims 41 to 48,
wherein the perfluororesin has a glass transition temperature of 60°C or higher.

**50.** The phase-separated fine particulate according to claim 49,
wherein the glass transition temperature of the perfluororesin is 120°C or higher.

**51.** The phase-separated fine particulate according to any one of claims 41 to 50,
wherein the phase-separated fine particulate has a porosity of 30% by volume or higher.

**52.** The phase-separated fine particulate according to claim 51,
wherein the porosity of the phase-separated fine particulate is 40% by volume or higher.

**53.** The phase-separated fine particulate according to any one of claims 41 to 52,
wherein the perfluororesin contains a particulate dispersion stabilizer, and the particulate dispersion stabilizer contains at least one fluorine-containing particulate dispersion stabilizer selected from the group consisting of a fluoropolymer (α) of a monomer (α) represented by the following general formula (α) and an anionic fluorine-containing surfactant represented by the following general formula (1):

general formula (α):

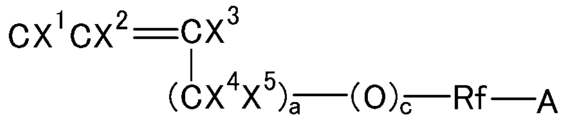

wherein $X^1$, $X^2$, $X^3$, $X^4$, and $X^5$ are each independently H, F, $CH_3$, or $CF_3$, and at least one of $X^1$, $X^2$, $X^3$, $X^4$, and $X^5$ is F; a and c are the same as or different from each other and each independently 0 or 1; Rf is a C1-C40 fluorine-containing alkylene group, a C2-C100 fluorine-containing alkylene group containing an ether bond, or a C2-C100 fluorine-containing alkylene group containing a keto group; A is -COOM, $-SO_3M$, $-OSO_3M$, or $-C(CF_3)_2OM$ (wherein M is H, a metal atom, $NR^7_4$, an optionally substituted imidazolium, an optionally substituted pyridinium, or an optionally substituted phosphonium; and $R^7$ is H or an organic group); and

general formula (1): $Rf§(X^-)_j(M^+)_j$

wherein Rf§ is a C1-C30 (per)fluoroalkyl chain or a (per) fluoro (poly) oxyalkylene chain; $X^-$ is $-COO^-$, $-PO_3^-$, or $-SO_3^-$; $M^+$ is selected from $H^+$, $NH_4^+$, and an alkali metal ion; and j is optionally 1 or 2.

**54.** The phase-separated fine particulate according to claim 53,
wherein the particulate dispersion stabilizer further contains at least one polymer dispersion stabilizer selected from the group consisting of polyvinyl alcohol, methylcellulose, ethylcellulose, polyacrylic acid, polymethacrylic acid, polyacrylimide, polyethylene oxide, polyvinylpyrrolidone, and a poly(hydroxystearic acid-g-methyl methacrylate-co-methacrylic acid) copolymer.

**55.** The phase-separated fine particulate according to any one of claims 41 to 52,
wherein the perfluororesin contains a particulate dispersion stabilizer, and the particulate dispersion stabilizer includes at least one selected from the group consisting of a homopolymer of $CF_2=CFCF_2CF_2SO_3H$, a homopolymer of $CF_2=CF-OCF_2CF_2COOH$, polyvinyl alcohol, and polyvinylpyrrolidone.

**56.** The phase-separated fine particulate according to any one of claims 41 to 55,
wherein the non-polymerizable solvent includes at least one selected from the group consisting of $H(CF_2)_6CH_2OH$, $F(CF_2)_3CH_2OH$, and $F(CF_2)_4CH_2OH$.

**57.** An aqueous dispersion comprising the phase-separated fine particulate according to any one of claims 41 to 56.

**58.** A composition comprising:

the hollow fine particulate according to any one of claims 24 to 40; and
an insulating resin.

**59.** A composition comprising:

the phase-separated fine particulate according to any one of claims 41 to 56; and
an insulating resin.

FIG.1

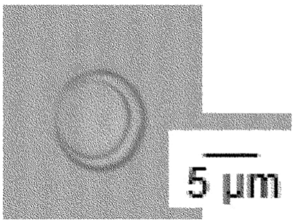


FIG.2

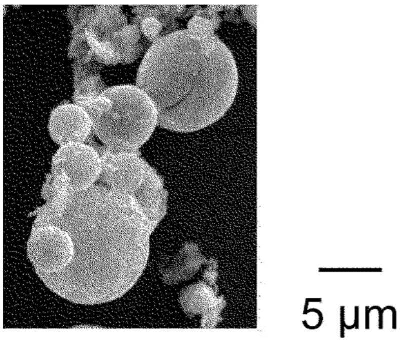


FIG.3

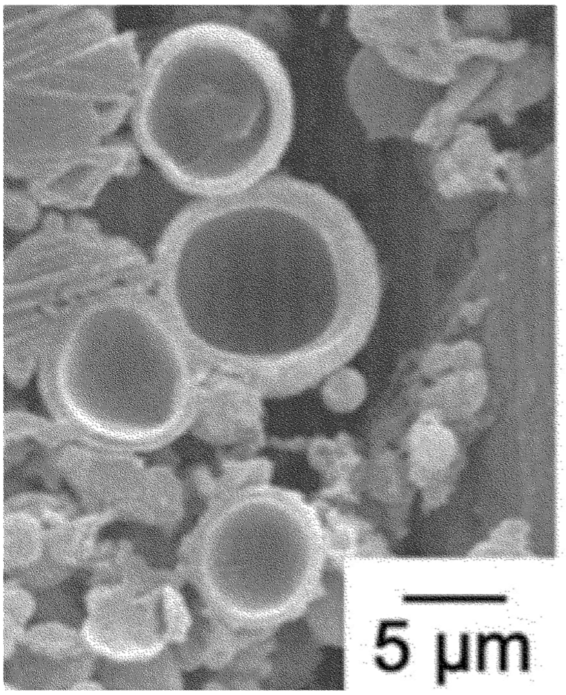

FIG.4

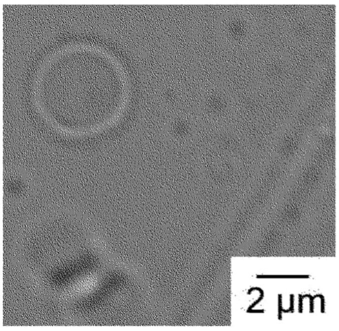


FIG.5

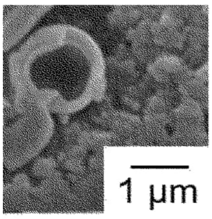


FIG.6

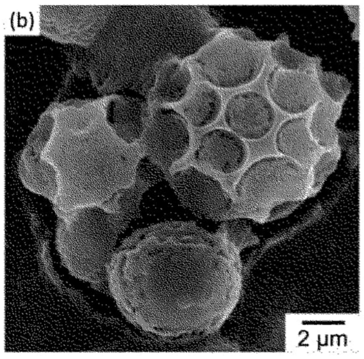


FIG.7

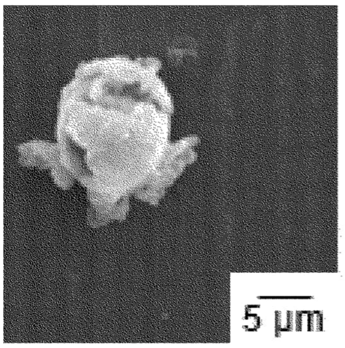

FIG.8

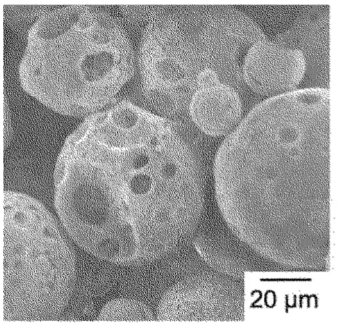


FIG.9

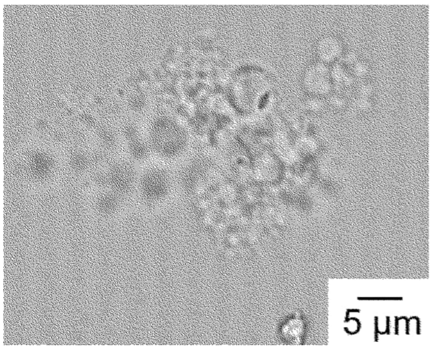


FIG.10

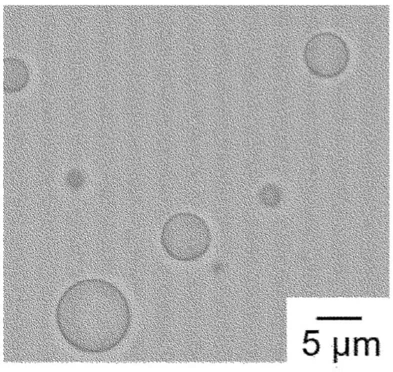

FIG.11

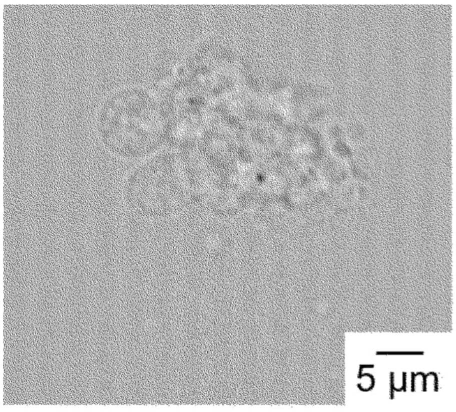


FIG.12

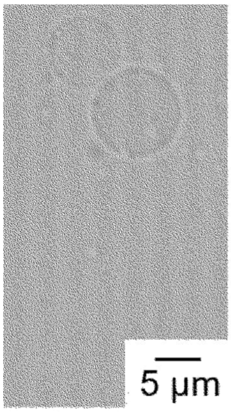


FIG.13

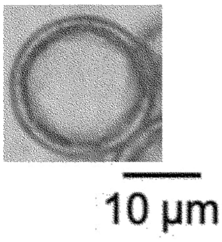


FIG.14

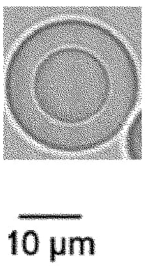

FIG.15

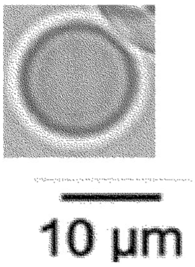


FIG.16

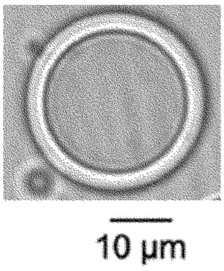


FIG.17

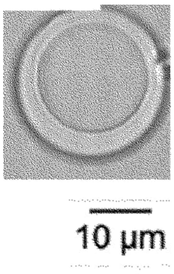


FIG.18

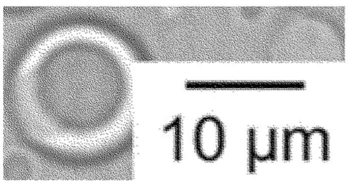


FIG.19

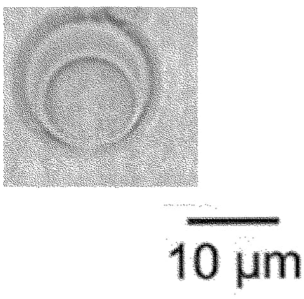

## INTERNATIONAL SEARCH REPORT

International application No.
**PCT/JP2024/014415**

**A. CLASSIFICATION OF SUBJECT MATTER**

***B01J 13/14***(2006.01)i; ***C08F 216/14***(2006.01)i; ***C08F 224/00***(2006.01)i; ***C08L 27/12***(2006.01)i; ***C08L 101/00***(2006.01)i
FI: B01J13/14; C08F216/14; C08F224/00; C08L101/00; C08L27/12

According to International Patent Classification (IPC) or to both national classification and IPC

**B. FIELDS SEARCHED**

Minimum documentation searched (classification system followed by classification symbols)

B01J13/14; C08F216/14; C08F224/00; C08L27/12; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-525585 A (LG CHEM, LTD.) 07 September 2017 (2017-09-07) claims, paragraphs [0016], [0073], examples 1, 2, table 1 | 24-25, 34-35, 40 |
| A | | 1-23, 26-33, 36-39, 41-59 |
| X | WO 2022/009917 A1 (DAIKIN INDUSTRIES, LTD.) 13 January 2022 (2022-01-13) claims, paragraphs [0006], [0049]-[0053], [0084]-[0087], [0097]-[0099], examples, drawings , etc. | 1, 6-12, 14-16, 21-30, 32-35, 38-52, 55, 57-59 |
| A | | 2-5, 13, 17-20, 31, 36-37, 53-54, 56 |
| A | JP 2010-167410 A (FUJIFILM CORPORATION) 05 August 2010 (2010-08-05) claims, paragraph [0014], examples , etc. | 1-59 |
| A | WO 2020/226010 A1 (DAIKIN INDUSTRIES, LTD.) 12 November 2020 (2020-11-12) claims, examples | 1-59 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/014415**

**Box No. III Observations where unity of invention is lacking (Continuation of item 3 of first sheet)**

This International Searching Authority found multiple inventions in this international application, as follows:

Document 1: JP 2017-525585 A (LG CHEM., LTD.) 07 September 2017 (2017-09-07), claims, paragraphs [0016], [0073], examples 1-2, table 1

(Invention 1) Claims 1-2 and 4-12

Claims 1-2 and 4-12 are classified as invention 1 as a result of having the special technical feature of "a method for manufacturing hollow microparticles, the method comprising:
a step A for obtaining a dispersion by dispersing, in water, a solution containing a perfluoromonomer, and a non-polymerizable solvent that can dissolve the perfluoromonomer and has an SP value of 9.00-9.80 (cal/cm3)1/2;
a step B for polymerizing the perfluoromonomer to obtain phase separated microparticles containing a perfluororesin and having a monoporous structure; and
a step C for removing the non-polymerizable solvent in the phase separated microparticles to obtain hollow microparticles having a monoporous structure".

(Invention 2) Claims 24-40

Claims 24-40 share, with claim 1 classified as invention 1, the feature of
"hollow microparticles containing a perfluororesin having polymerization units based on a perfluoromonomer, and having a monoporous structure".
However, this feature does not make a contribution over the prior art in the light of the content disclosed in document 1 (claims, paragraphs [0016], [0073], examples 1-2, table 1), and thus cannot be said to be a special technical feature. Furthermore, there are no other identical or corresponding special technical features between claims 24-40 and claim 1.

Additionally, claim 24 does not depend from claim 1. Moreover, claims 24-40 are not substantially identical to or similarly closely related to any of the claims classified as invention 1.

Therefore, claims 24-40 cannot be classified as invention 1.

Claims 24-40 are classified as invention 2 as a result of having the special technical feature of "hollow microparticles
that contain a perfluororesin having polymerization units based on a perfluoromonomer,
that do not substantially contain a non-polymerizable solvent,
that have an average particle diameter of at least 1.0 μm, and
that have a monoporous structure".

(Invention 3) Claims 41-59

Claims 41-59 share, with claim 1 classified as invention 1 and claim 24 classified as invention 2, the feature of
"hollow microparticles containing a perfluororesin having polymerization units based on a perfluoromonomer, and having a monoporous structure".
However, this feature does not make a contribution over the prior art in the light of the content disclosed in document 1 (claims, paragraphs [0016], [0073], examples 1-2, table 1), and thus cannot be said to be a special technical feature. Furthermore, there are no other identical or corresponding special technical features between claims 41-59 and claim 1 or 24.

Additionally, claim 24 does not depend from claim 1. Moreover, claims 41-59 are not substantially identical to or similarly closely related to any of the claims classified as invention 1 or 2.

Therefore, claims 41-59 cannot be classified as invention 1 or 2.

Claims 41-59 are classified as invention 3 as a result of having the special technical feature of "phase separated microparticles
that contain a perfluororesin having polymerization units based on a perfluoromonomer, and a non-polymerizable solvent,
that have an average particle diameter of at least 1.0 μm, and
that have a monoporous structure".

Form PCT/ISA/210 (continuation of first sheet) (July 2022)

**INTERNATIONAL SEARCH REPORT**

International application No.
**PCT/JP2024/014415**

**Box No. III Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2024/014415**

| Patent document cited in search report | Publication date (day/month/year) | Patent family member(s) | Publication date (day/month/year) |
|---|---|---|---|
| JP 2017-525585 A | 07 September 2017 | US 2016/0375657 A1<br>claims, paragraph [0089], examples 1, 2, table 1<br>WO 2016/052873 A1<br>EP 3045309 A1<br>KR 10-2016-0038730 A<br>CN 105684560 A<br>TW 201625408 A | |
| WO 2022/009917 A1 | 13 January 2022 | US 2023/0144395 A1<br>claims, paragraphs [0008], [0052]-[0057], [0126]-[0134], [0145]-[0147], examples, drawings , etc.<br>EP 4166579 A1<br>KR 10-2023-0022436 A<br>CN 115803350 A<br>TW 202211980 A | |
| JP 2010-167410 A | 05 August 2010 | (Family: none) | |
| WO 2020/226010 A1 | 12 November 2020 | US 2022/0056178 A1<br>claims, examples<br>EP 3967715 A1<br>CN 113748137 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005213366 A
- JP 2020183500 A
- US 2007015864
- US 8012007 B
- US 2007015865
- US 18012007
- US 2007015866
- US 2007025902
- US 1022007 A